(19) Europäisches Patentamt
European Patent Office
Office européen des brevets

(11) **EP 4 657 323 A1**

(12) **EUROPEAN PATENT APPLICATION**

(43) Date of publication:
**03.12.2025 Bulletin 2025/49**

(21) Application number: **25177356.0**

(22) Date of filing: **19.05.2025**

(51) International Patent Classification (IPC):
**G06N 3/0475** *(2023.01)* **G06N 3/0895** *(2023.01)*

(52) Cooperative Patent Classification (CPC):
**G06N 3/08; G06N 3/044; G06N 3/045;**
**G06N 3/0464; G06N 3/047; G06N 3/0475;**
**G06N 3/048; G06N 3/082; G06N 3/084;**
**G06N 3/088; G06N 3/0895; G06N 3/094;**
**G06N 3/096; G06N 7/01**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **22.05.2024 GB 202407310**

(71) Applicant: **Samsung Electronics Co., Ltd.**
**Suwon-si, Gyeonggi-do 16677 (KR)**

(72) Inventors:
• **CHAVHAN, Ruchika**
**Chertsey, KT16 0RS (GB)**
• **LI, Da**
**Chertsey, KT16 0RS (GB)**
• **HOSPEDALES, Timothy**
**Chertsey, KT16 0RS (GB)**

(74) Representative: **Appleyard Lees IP LLP**
**15 Clare Road**
**Halifax HX1 2HY (GB)**

(54) **METHOD FOR REMOVING UNDESIRED CONCEPTS FROM DIFFUSION MODELS**

(57)    Broadly speaking, embodiments of the present techniques provide a method for modifying a pre-trained diffusion model used for image generation to remove undesired concepts from being included in images generated by the model. Advantageously, the present techniques enable a pre-trained diffusion model to be modified for a user or set of users to remove certain undesired concepts from being included in images generated by the model. This may reduce the risk that the model generates images including undesirable concepts, such as nudity, violence, copyrighted images or styles, or bias (such as gender or racial bias).

FIGURE 4A

**EP 4 657 323 A1**

## Description

**Field**

The present application generally relates to a method for removing undesired concepts from diffusion models. In particular, the present application provides a method for modifying a pre-trained diffusion model used for image generation to remove undesired concepts from being included in images generated by the model.

**Background**

In recent years, text-to-image generation has witnessed significant advances driven by the development and adoption of diffusion models, DMs, across industries and real-world scenarios. However, this swift advancement presents a substantial risk. Diffusion models can threaten artists' livelihoods through style replication, generate convincing deepfakes and Not Safe For Work, NSFW, content, and perpetuate societal biases. The risks associated with large-scale text-to-image models arise from billion-sized web-scraped datasets used in training, comprising public datasets like LAION, COYO, and CC12M, that often lack human-level quality assurance. A simplistic and naive solution to mitigate these risks involves fine-tuning the model on datasets without this undesired content; however, this approach can prove to be highly compute-expensive.

Several efforts addressing the risks of diffusion models have been made from the perspective of Concept Editing and Model Unlearning (MU), both aimed at eliminating undesired prompts, albeit with differing objectives. Concept editing methods seek to eliminate undesired prompts by aligning latent representations of the target concept with a concept to be retained, via methods such as maximizing similarity and token remapping. Conversely, Model Unlearning formulates an objective that penalizes forgetting desired concepts while promoting the elimination of undesired ones, but this requires expensive computations and fine-tuning. Moreover, as most concept editing approaches rely on some form of token blacklisting or resteering, adversarial attacks based on textual inversion have demonstrated the ability to circumvent concept erasure methods that were previously believed to be robust with a near-perfect success rate.

The present applicant has therefore identified the need for a technique to reduce the chance of pre-trained diffusion models generating images that depict specific undesired concepts.

**Summary**

In a first approach of the present techniques, there is provided a computer-implemented method for modifying a pre-trained diffusion model used for image generation to remove undesired concepts being included in images generated by the model, the method comprising: obtaining a pre-trained diffusion model, the diffusion model comprising a plurality of linear layers, each linear layer comprising at least one output neuron; inputting into the diffusion model, for each undesired concept, a first set of text prompts for generating reference images and a second set of text prompts for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept; determining, for at least one linear layer of the plurality of linear layers: a first set of activated neurons of the linear layer when the first set of text prompts is input, and a second set of activated neurons of the linear layer when the second set of text prompts is input; obtaining a weight matrix for the linear layer, wherein elements of the weight matrix are weight neurons, and wherein each row of the weight matrix is connected to a single output neuron in the linear layer; calculating, using the first set of activated neurons and the obtained weight matrix for the linear layer, a first importance score for each weight neuron of the weight matrix; calculating, using the second set of activated neurons and the obtained weight matrix for the linear layer, a second importance score for each weight neuron of the weight matrix; comparing the first importance score and second importance score for each weight neuron; identifying, based on the comparing, at least one skilled weight neuron from the second values of weight neurons in the weight matrix, wherein the at least one skilled weight neuron is responsible for the undesired concept; and modifying each identified skilled weight neuron in the weight matrix, to thereby provide a modified pre-trained diffusion model

Diffusion models are a class of generative machine learning, ML, models which learn a diffusion process that generates a probability distribution of a given dataset. Diffusion models are used to generate new data samples based on the data they have been trained on. For example, a diffusion model that has been trained on an image dataset depicting human faces can generate new images of human faces with various features and expressions, even if those new faces were not present in the original training dataset. Diffusion models have shown impressive performance in various image generation tasks, including image super-resolution and restoring missing areas of an image.

Diffusion models have three main components: a forward process, a reverse process, and a sampling process. During the forward process (also known as forward diffusion, or simply diffusion process), the model applies a sequence of transformations to diffuse samples in a training dataset (having a 'complex' distribution) until a desired simple data points distribution is reached. Each step in the process introduces more simplicity until all that is left is simple noise with original patterns obscured by this noise. An example of this noisy, simple, distribution may be a white noise distribution, or the noise may be distributed in any other way. During the reverse process (also known as reverse diffusion or denoising), the model generates a sample from the simple data points distribution, and then maps it back to a complex distribution by inverting the transformations. The diffusion model uses a conditioning, or prompt, to generate an image using the reverse process. That is, the conditioning is used to guide the denoising process and determine the content of the final image. In this way, diffusion models can generate new data samples by starting from a point in the simple distribution and diffusing it step-by-step to the desired complex data distribution. The whole training process can be thought of as destroying the training dataset samples through the successive addition of Gaussian noise, and learning to recover the data by reversing this noising process (i.e. denoising). Once trained, new samples can be generated by passing randomly sampled noise through the learned denoising process. This is the sampling process (i.e. new sample generation process).

The present techniques comprise modifying a pre-trained diffusion model. The diffusion model may have been trained, using the process described above, to generate images using prompts (e.g. text prompts). The diffusion model may have been trained on a server. The diffusion model may comprise a plurality of linear layers for performing simple linear transformations on inputs. The linear layers may be feed-forward layers.

Advantageously, the present techniques enable a pre-trained diffusion model to be modified for a user or set of users to remove certain undesired concepts from being included in images generated by the model. This may reduce the risk that the model generates images including undesirable concepts, such as nudity, violence, copyrighted images or styles, or bias (such as gender or racial bias). Any of these outcomes could have an adverse effect on the reputation of the provider of the model, and could also have negative effects on the audience or recipient of the generated images. Therefore it is important to be able to ensure that commercialised generative AI models minimise such risk. The present techniques provide a strategy to edit any off-the-shelf text2image diffusion model to remove its ability to produce such undesirable outcomes, while only minimally affecting generation otherwise. Importantly, the editing does not require retraining the model, or access to the original training data, and it does not affect speed of image generation.

Advantageously, the present techniques use text prompts to identify the skilled neurons which are causing the undesired concept to appear in images, but without actually generating images using those text prompts. This is beneficial because it is not necessary to spend time generating images when it is clear from the neuron activations at an early stage of the image generation process (prior to any image being generated) that some neurons seem to be activated by the undesired concept in the prompts.

As noted above, the present techniques utilise the first set of text prompts for generating reference images and the second set of text prompts for generating target images, but do not utilise any actual images generated using those prompts. The second set of text prompts would, if the model were run all the way to the point at which images are output, generate target images that depict at least one undesired concept, whereas the reference images, if generated, would correspond to the target images but do not contain the undesired concept. For example, a target image depicting "a group of business people" may show a group of white men, while the reference image may show a more diverse group of people of different races and genders. To generate these images, the text prompts contain an object, which is to appear in the images, and the text prompts of the second set of text prompts also include an undesired concept. However, as noted above, no images corresponding to these text prompts are actually needed to identify the skilled neuron(s) for each undesired concept. The reference to images is used merely to help illustrate what is meant by an undesired concept.

An undesired concept may be any concept that it is desirable for the model to forget or ignore. For example, the undesired concept may be any of: nudity, violence, styles, copyrighted content, copyrighted styles (e.g. artistic styles), bias, specific objects, specific humans or animals, and so on. For example, it may be desirable for images to be generated without containing any nudity, or without containing any stereotypes or biases. Similarly, a user may wish for images to be generated without containing specific objects, people or animals. For instance, if the user is afraid of spiders, then spiders may be an undesired concept. Thus, if the user asks the modified model to generate a Halloween picture, no spiders would be included in the picture.

As explained in more detail below, the identified skilled neurons are not strictly removed from the weight matrix. Similarly, actual neurons are not removed from the layers of the model. Instead, identified skilled neurons are modified. For example, modifying each identified skilled weight neuron may comprise zeroing out the skilled neurons from the weight matrix, so that they no longer contribute to the generation of an image, which reduces the chance of the undesired concept appearing in the generated image. The skilled neuron may be pruned or zeroed-out by making changes to the weight matrix.

In one case, the first and second set of text prompts may contain a single text prompt each. However, the method works better if the first and second set of text prompts each contains multiple prompts, because this helps to identify which neurons are skilled neurons that would cause a particular undesired concept to appear in images (when generated), and which neurons would simply cause the objects in each prompt to appear in images (when generated). Therefore, the first set and second set of text prompts may each contain a plurality of text prompts, and each text prompt in the second set of text prompts includes the same undesired concept.

Generally speaking, generative diffusion models generate images over a series of time steps. Thus, the step of determining the first and second set of neuron activations comprises determining the first and second set of neuron activations over a series of time steps. A single time step (i.e. a single forward pass) may be sufficient to per prompt to identify the skilled neurons. In some cases, multiple steps may be required. However, it will be understood, as noted above, that the full series of time steps is not needed because it is not necessary to actually generate images to identify the skilled neurons. Then, the step of identifying each skilled weight neuron may comprise identifying each skilled weight neuron over each time step of the series of time steps. As explained below, it may not be necessary to identify the skilled neurons in every time step of the series of time steps. In some cases, it may be sufficient to do so during some initial or early time steps in the series of time steps.

Generally speaking, and also at each time step, identifying each skilled weight neuron may comprise: identifying a set of weight neurons in each row of the weight matrix that is connected to each activated neuron in the second set of activated neurons (and which would be responsible for generating the target image when such an image is actually generated); and identifying, within the set of weight neurons, a subset of skilled weight neurons that are connected to each activated neuron in the second set of activated neurons and that are responsible for the undesired concept (i.e. responsible for generating the undesired concept in the target image when such an image is actually generated). Thus, the process may involve two stages. First, every weight neuron that is activated in response to the second set of text prompts is identified. At this stage, it is not clear which of those weight neurons are specifically linked to any undesired concept in the second set of text prompts. For example, if the undesired concept is nudity, at this stage it is unclear which weight neurons might be linked to activated neurons that are activated in response to the undesired concept (nudity) and which might be linked to activated neurons that are responsible for everything else (i.e. what is activated in response to the first set of text prompts). Thus, the second stage involves filtering and disentangling the skilled weight neurons from the weight neurons identified in the first stage. These two stages are now explained.

In the first stage, identifying (at each time step) the set of weight neurons that contribute to the generation of the target image may comprise: identifying, for each row, each weight neuron within the row having a second importance score that is within a top-k% of second importance scores for weight neurons in the row. That is, only those weight neurons which are highly important for the second set of text prompts (and for eventually generating the target image) are considered. This helps to reduce the complexity of the problem of identifying the skilled weight neurons, because the weight neurons that are not important for the second set of text prompts (target image) and therefore, do not contribute strongly to the undesired concept(s) appearing in any target image, are filtered out. The importance of weight neurons in each row is considered (rather than in the weight matrix as a whole), because, as noted above, each row of the weight matrix is connected to a single output neuron in the linear layer. Thus, the present techniques seek to identify the weight neurons in each row that are responsible for activation/firing of the corresponding output neuron in the linear layer.

In the second stage, identifying (at each time step) a subset of skilled weight neurons may comprise, for each weight neuron in the set of weight neurons: comparing the first importance score and second importance score for each weight neuron and determining whether the second importance score for the weight neuron is higher than the first importance score for the weight neuron, which indicates that the weight neuron is responsible for an undesired concept (appearing in any eventual target image). In other words, to identify the skilled weight neurons from the set of weight neurons, the importance scores of the weight neurons are used. If the second importance scores for a weight neuron is less than or equal to the first importance score for the weight neuron, then that weight neuron is not responsible for causing the undesired concept to appear in the target image. That is, the weight neuron is responsible for features that appear in both the reference image and the target image. If, on the other hand, the second importance score is greater than the first importance score for a specific weight neuron, then that weight neuron is responsible for a feature that only appears (or appears more strongly) in the target image, which is likely to be an undesired concept. In this way, the importance score is used to identify the skilled weight neurons. As noted below in more detail with reference to the Figures, the importance score may be a WANDA score.

Once the skilled weight neurons have been identified, it is necessary to modify them in the weight matrix so that the undesired concept is less likely to appear in future images generated by the diffusion model. As noted above, skilled weight neurons are not removed from the weight matrix for a particular layer, but are instead modified. For example, the modifying may include masking out the skilled weight neurons using a binary mask or binary mask matrix, which is a matrix of binary values (e.g. zeros and ones). Thus, the method may further comprise: generating a binary mask matrix for the weight matrix, wherein each element of the binary mask matrix corresponds to a weight neuron in the weight matrix; setting the value of an element in the binary mask matrix to be zero when the corresponding weight neuron in the weight matrix is identified as a skilled weight neuron; and setting the value of all other elements in the binary mask matrix to be one. In this way, the binary mask matrix masks out all the skilled weight neurons from the weight matrix, and no changes to the weight matrix itself need to be made.

As noted above, it is beneficial to utilise the binary mask matrix generated at each time step. Thus, the method may further comprise: aggregating the binary mask matrix generated at each time step of the series of time steps. Any suitable way of aggregating the binary mask matrix from each time step may be used. One example technique is described below with respect to the Figures, in which the value of an element in an aggregated binary mask matrix is set as one if any of the corresponding elements from the masks for the different time steps is one. In other words, a logical OR operation is used to perform the aggregation, on an element-by-element basis.

In some cases, the aggregating may be performed for a pre-defined number of initial time steps of the series of time steps. That is, it may be sufficient for the purpose of eliminating undesired concepts to focus on the binary mask matrices generated for the first few time steps in the series of time steps. This also makes the process more computationally efficient, which allows undesired concepts to be removed quickly.

As noted above, removing each identified skilled weight neuron may comprise: applying the aggregated binary mask matrix to the weight matrix, thereby removing each identified skilled weight neuron from the weight matrix.

More specifically, applying the aggregated binary mask matrix to the weight matrix may comprise: setting a value of each weight neuron in the weight matrix to zero when the corresponding element in the binary mask matrix is zero; and retaining an original value of all other weight neurons in the weight matrix. In this way, the original values of the weight neurons in the weight matrix are retained if they correspond to unskilled neurons, and are removed (set to zero) when they are skilled neurons.

In some cases, as described below with reference to the Figures, when multiple binary masks are to be aggregated, instead of setting the mask values for skilled neurons to be zero, they may be set to one (and equivalently, the mask values for unskilled neurons may be set to zero instead of one). This may be for ease and efficiency of the subsequent computations, i.e. the aggregation. This is because there are many fewer skilled neurons than unskilled neurons, so at this stage, it may be simpler to set the value of the elements of the mask matrix corresponding to the skilled neurons to one, to introduce sparsity in the binary mask matrix. (Sparse matrices are those which contain mostly zeros). This reduces the complexity when aggregating multiple binary masks. Then, when the aggregated binary mask matrix is applied to the weight matrix, a logical NOT operation is needed to ensure the right neurons, i.e. the skilled neurons, are pruned from the weight matrix. That is, although in the binary mask matrices for the time steps, and in the aggregated binary mask matrix, each element with a value of one represented a skilled neuron, in order to remove the skilled neurons, the logical NOT operation needs to be applied so that the skilled neurons are zeroed-out in the weight matrix.

The step of calculating the first and second importance scores for each weight neuron may comprise: calculating, for each weight neuron, an element-wise product of a magnitude of the weight neuron (i.e. an absolute value of the weight neuron) and an input feature-dimension-wise $\ell_2$ norm. E.g. given a input $\mathbf{X} \in \mathbf{R}^{\{Bxd\}}$, where B is the number of data points, i.e. the number of prompts, the input feature-dimension-wise $\ell_2$ norm computes the $\ell_2$ norm of each column of $\mathbf{X}$ and results in a $d$ dimensional vector. (Since the scores require calculating a norm of each input activation $\mathbf{X}$, it is clear that a set of prompts are used to determine the activations).

In a second approach of the present techniques, there is provided an apparatus for modifying a pre-trained diffusion model used for image generation to remove undesired concepts being included in images generated by the model, the apparatus comprising: at least one processor coupled to memory, arranged for: obtaining a pre-trained diffusion model, the diffusion model comprising a plurality of linear layers, each linear layer comprising at least one output neuron; inputting into the diffusion model, for each undesired concept, a first set of text prompts for generating reference images and a second set of text prompts for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept; determining, for at least one linear layer of the plurality of linear layers: a first set of activated neurons of the linear layer when the first set of text prompts is input, and a second set of activated neurons of the linear layer when the second set of text prompts is input; obtaining a weight matrix for the linear layer, wherein elements of the weight matrix are weight neurons, and wherein each row of the weight matrix is connected to a single output neuron in the linear layer; calculating, using the first set of activated neurons and the obtained weight matrix for the linear layer, a first importance score for each weight neuron of the weight matrix; calculating, using the second set of activated neurons and the obtained weight matrix for the linear layer, a second importance score for each weight neuron of the weight matrix; comparing the first importance score and second importance score for each weight neuron; identifying, based on the comparing, at least one skilled weight neuron from the second values of weight neurons in the weight matrix, wherein the at least one skilled weight neuron is responsible for the undesired concept; and modifying each identified skilled weight neuron in the weight matrix, to thereby provide a modified pre-trained diffusion model.

The apparatus comprises at least one processor and memory. The memory may store instructions that, when executed by the at least one processor individually or collectively, cause the at least one processor to perform the above-described steps.

In some cases, the apparatus may be a server, set of servers, computer or set of computers, which are used to modify a diffusion model centrally, before deploying the modified diffusion model on a plurality of user devices or providing the diffusion model as a service to a plurality of users. This enables the diffusion model to be centrally modified to suit multiple users and use cases.

In other cases, the apparatus may be a user apparatus, and a user may perform modification of the diffusion model locally for their own purposes. For example, the user may be afraid of spiders and may wish to ensure that, when they use the diffusion model to generate images, no spiders are included in the generate images. Thus, the user-specific modifying may relate to specific concepts or objects. Higher-level concepts, such as sexism, violence, racism, and so on, may be more appropriate to remove centrally as they are also more difficult concepts to deal with.

Thus, in such cases, the apparatus may further comprise: at least one interface for receiving, from a user of the user apparatus, the first text prompt and the second text prompt, where the second text prompt relates to a user-specific undesired concept.

The user apparatus may be a smart device. The user apparatus may be a smartphone. A smartphone is an example of a smart device. The user apparatus may be a smart appliance. A smart appliance is another example of a smart device. An example of a smart appliance is a smart television (TV), a smart fridge, a smart oven, a smart vacuum cleaner, a smart robotic device, and so on. More generally, the user apparatus may be a constrained-resource device, but which has the minimum hardware capabilities to personalise a trained ML model, and to use the personalised ML model. The user apparatus may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge, smart vacuum cleaner, smart lawn mower, smart oven, etc). It will be understood that this is a non-exhaustive and non-limiting list of example apparatuses.

The features described above with respect to the first approach apply equally to the second approach and therefore, for the sake of conciseness, are not repeated.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figure 1 illustrates a problem with existing diffusion-based models, and the goal of the present techniques;
Figure 2 shows a schematic diagram of the present techniques;
Figure 3 is a schematic diagram showing how a Wanda score is calculated and used to perform pruning;
Figure 4A is a flowchart illustrating example steps to perform concept pruning.
Figure 4B is a flowchart of example steps to modify a pre-trained diffusion model for image generation to remove undesired concepts from generated images;
Figure 5 is a table showing a calibration set formulation for different concepts;
Figure 6 shows qualitative examples that demonstrate the strong erasing capabilities of the present techniques with high-quality realistic output images;
Figure 7 is a table showing quantitative results of artist style removal over five artist styles;
Figure 8 is chart showing explicit content erasure;
Figure 9 is a table showing that the present techniques demonstrate robustness to adversarial attacks;
Figure 10 is a table showing that ConceptPrune has superior erasure performance on average while effectively minimizing interference on non-targeted classes.
Figure 11 is a table showing that the present techniques are more robust to adversarial attacks aimed at eliciting erased concepts;
Figure 12 is a table showing quantitative results for multi-object erasure;
Figure 13A shows qualitatively that the present techniques effectively disentangles skilled neurons responsible for specific concepts from general object-generating neurons;
Figure 13B shows that skilled neurons are localised to a very compact subspace; and

Figure 14 is a block diagram of an apparatus for modifying a pre-trained diffusion model.

**Detailed description of the drawings**

Broadly speaking, embodiments of the present techniques provide a method for modifying a pre-trained diffusion model used for image generation to remove undesired concepts from being included in images generated by the model. Advantageously, the present techniques enable a pre-trained diffusion model to be modified for a user or set of users to remove certain undesired concepts from being included in images generated by the model. This may reduce the risk that the model generates images including undesirable concepts, such as nudity, violence, copyrighted images or styles, or bias (such as gender or racial bias).

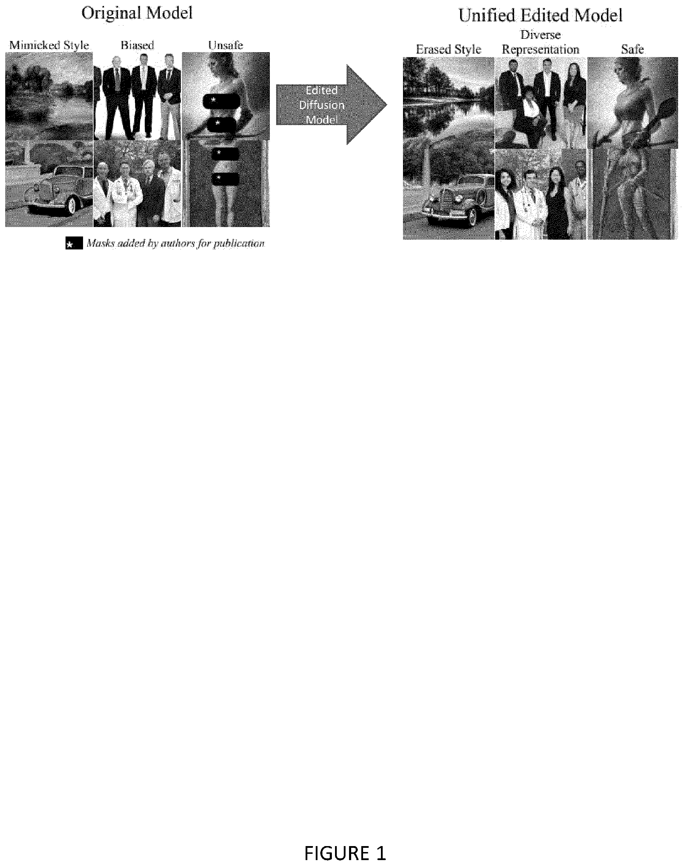

Figure 1 illustrates a problem with existing diffusion-based models, and the goal of the present techniques. Many organisations are making products based on diffusion models, such as new digital wallpapers or stickers, and inpainting tools. However, existing text-to-image generative AI based on diffusion models have a risk of producing undesirable images including nudity, violence, copywrited images or styles, or bias such as gender, as shown on the left hand side of Figure 1. Any of these outcomes would have adverse effect on the reputation of the organisation. Therefore it is important to be able to ensure that commercialized generative AI models minimize such risk. The present techniques provide a strategy to edit any off-the-shelf text2image diffusion model in order to remove the model's ability to produce such undesirable outcomes, while only minimally affecting generation otherwise, as shown on the right hand side of Figure 1. Importantly, the editing does not require retraining the model, or access to the original training data, and it does not affect the generation speed.

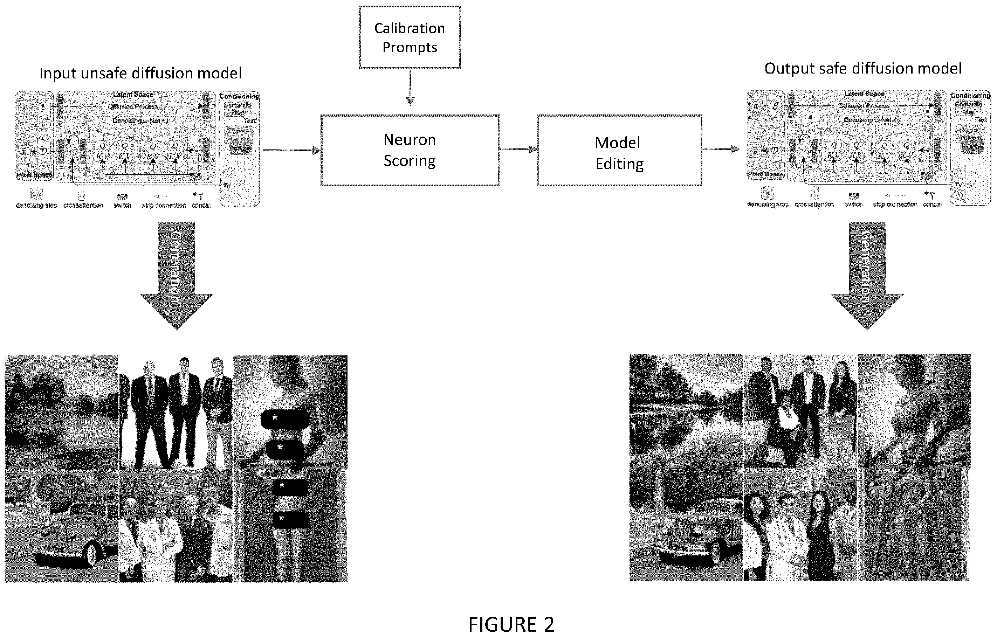

Figure 2 shows a schematic diagram of the present techniques. The present techniques, referred to herein as "ConceptPrune", provide an entirely training-free method for concept editing that, for the first time, tackles knowledge editing in diffusion models through the lens of pruning. Leveraging recently introduced pruning heuristics, the present techniques identify regions or neurons in feed-forward layers of diffusion models that strongly activate in the presence of a concept, which are denoted as *skilled neurons.* Subsequently, concept removal can be achieved by simply pruning or *zeroing* out these skilled regions. It is demonstrated that ConceptPrune provides a rapid, efficient, and unified solution for erasing undesired concepts, including various artist styles, nudity, undesired objects, and gender biases. Notably, it maintains the outstanding image-generation prowess of pre-trained models while remaining resilient to adversarial attacks.

A brief discussion of relevant existing techniques is now provided.

Diffusion model concept editing: Most concept editing works within diffusion models aim to eliminate target concepts by aligning the model's output with that of a reference prompt, whose concept it is desirable to retain. For example, to remove the concept 'nudity', the target prompt can be formulated as *"a photo* of a *naked person"* while the reference prompt can be *"a photo of a person".* Then the target concept "nudity" can be removed by minimizing certain metrics between denoised predictions of target and reference prompts, utilizing score-based composition as unsupervised training data, or employing attention re-steering to reduce cross-attention weights for the target prompts. Unlike approaches relying on latent representations, existing techniques like UCE operate on token rewriting, adjusting attention module parameters in the UNet to align token embeddings corresponding to the target prompt with the reference prompt using a closed-form solution.

Diffusion model unlearning (MU): MU operates with two separate datasets: the forgetting dataset and the retention dataset. The model is fine-tuned such that information from the forgetting dataset is erased while knowledge corresponding to the remaining data remains intact. There are different ways to achieve this dual objective optimization: a first-order dual problem formulation, generative replay on the retention dataset to ensure consistent retention of the dataset, and fine-tuning via saliency masks that retain the reference concept while disregarding the target concept. While these methods have shown remarkable efficacy in unlearning multiple concepts, they are usually computationally expensive, especially for large-scale models.

In contrast to the existing Concept Editing and MU methods, the present techniques operate on training-free neuron identification and pruning of critical regions that are responsible for generating undesired behaviors. While the present method does not necessitate any compute-intensive fine-tuning of parameters, it is directly aligned with the Concept Editing line of work as it is demonstrated (below) that denoised prediction matching is possible through the selective removal of neurons in the weight space.

Language model skilled neuron identification: Previous works present strong evidence that activation of specific neurons in feed-forward networks in transformers show high correlation with task labels, with perturbations to these neurons impacting task performance. Modular components within pre-trained transformers were identified by leveraging the inherent sparsity in neurons. Further, existing techniques demonstrate that these modules are specialized in distinct functions.

In contrast, the present techniques aim to identify neurons accountable for generating undesired concepts in diffusion models - a pursuit hitherto unexplored in this domain. Unlike language models, identifying neurons in diffusion models is complicated due to the intricate aggregation of neurons across multiple denoising time steps and the model's sensitivity to the output of previous time steps.

Language model pruning: Network pruning aims to reduce model size either by eliminating parameters and substructures from networks or by masking parameters guided by a score function. The present techniques primarily focuses on the latter approach.

One exploratory study delves into safety-aligned large language models (LLMs) that posses the ability to inhibit responses to harmful prompts. This study leverage heuristics from diverse pruning methods to pinpoint the regions that deny harmful responses to triggering prompts. Further, the study illustrates that these regions lie within a compact zone in the weight space and their removal poses a huge risk to safety alignment in LLMs. In contrast, the present techniques derive insights from model pruning heuristics to pinpoint critical regions in the weight space accountable for unsafe behaviors already learned by the pre-trained model and subsequently unlearn them permanently through model pruning.

The present techniques are now described with reference to the Figures.

Preliminaries - (Latent) diffusion models: Diffusion models (DMs) are essentially image denoisers that learn to reverse a forward Markov process in which noise is added into input images for multiple time steps $t \in [0, T]$. During training, given a real image $x_0$, a noisy image $x_t$ at time $t$ is obtained by $\sqrt{a_t}\mathbf{x_0} + \sqrt{1 - a_t}\boldsymbol{\epsilon}$, where $\varepsilon \sim \mathcal{N}(0, I)$ and $a_t$ is a gradually decaying parameter. Then, the denoiser learns to predict the noise added for obtaining $x_t$, such that $x_0$ can be reconstructed back by deducting predicted noise from $x_t$.

Latent diffusion models (LDMs) are widely used as the first choice of DMs as they accelerate the above process by operating in a latent space z, of input x. Thus, a LDM consists of a latent embedding denoiser $f_\theta(.)$, which is trained to predict the added noise by stochastically minimizing the objective $\mathcal{L}(\mathbf{z}, p) = \mathbb{E}_{\epsilon, \mathbf{x}, p, t}[\|\epsilon - f_\theta(\mathbf{z}_t, p, t)\|]$. Given a text prompt p, an encoder which extracts $\mathbf{z}_0$ from $\mathbf{x}_0$ and a decoder which maps the denoised $\hat{\mathbf{z}}_0$ to the pixel space. To synthesize an image during inference based on text prompt $p$, one first samples a noisy embedding $\mathbf{z}_T$ which is iteratively denoised for $T$ time steps until $\hat{\mathbf{z}}_0$ for generating the final image is obtained. Normally, the encoder and decoder are obtained from a frozen pre-trained autoencoder.

ConceptPrune: A Training-free Concept Editing Framework

Motivation: Concept editing methods aim to eliminate the undesired concept from a pretrained DM. Inspired by the observation that concepts can activate specific neurons in a neural network, the present Applicant asks the question: *Is it possible to remove an undesired concept from a pre-trained DM by simply finding neurons specific to this concept, and pruning them?* The answer is *yes.* It is shown herein that neurons in LDMs often specialise to specific concepts, and that pruning these neurons can be used to permanently eliminate undesired concepts from image generation.

Feed Forward Networks (FFNs) in Latent Diffusion Models: The present techniques focus on a pre-trained LDM, i.e. Stable Diffusion, characterized by a UNet denoted as $f_\theta$. The UNet architecture incorporates two ResNet blocks that sandwich two transformer blocks with self-attention between latent representations, cross-attention for the transfer of information from conditional inputs to latent representations, and a Feed-forward Network (FFN) with GEGLU activation. Prior research in concept editing primarily examines cross-attention or self-attention visualizations to detect concept presence or generation. Diverging from this approach and drawing inspiration from NLP skill discovery, the present focus lies on neurons within the Feed-forward networks.

The present techniques begin by denoting the input to the FFN layer $l$ at time step $t$ for text prompt p by $\mathbf{z}_t^l(p) \in \mathbb{R}^{d \times N}$, where $N$ is the number of latent tokens and corresponding output by $\mathbf{z}_t^{l+1}(p) \in \mathbb{R}^{d \times N}$. FFN in Stable Diffusion consists of GEGLU activation which operates as shown in Equation 1.

$$\mathbf{h}_t^l(p) = \sigma(\mathbf{W}^{l,1} \cdot \mathbf{z}_t^l(p)) \qquad\qquad (1)$$

$$\mathbf{z}_t^{l+1}(p) = \mathbf{W}^{l,2} \cdot \mathbf{h}_t^l(p)$$

where, $\mathbf{W}^{l,1} \in \mathbb{R}^{d' \times d}$, $\mathbf{W}^{l,2} \in \mathbb{R}^{d \times d'}$ are weight matrices in the first and second linear layers, bias terms are omitted for simplicity and $\sigma(\cdot)$ is GEGLU activation. The present techniques regard $\mathbf{W}^{l,2}[i, :]$ *the* i-th row and $\mathbf{W}^{l,2}[i, j]$ the element in *i*-th row and *j*-th column of matrix $\mathbf{W}^{l,2}$.

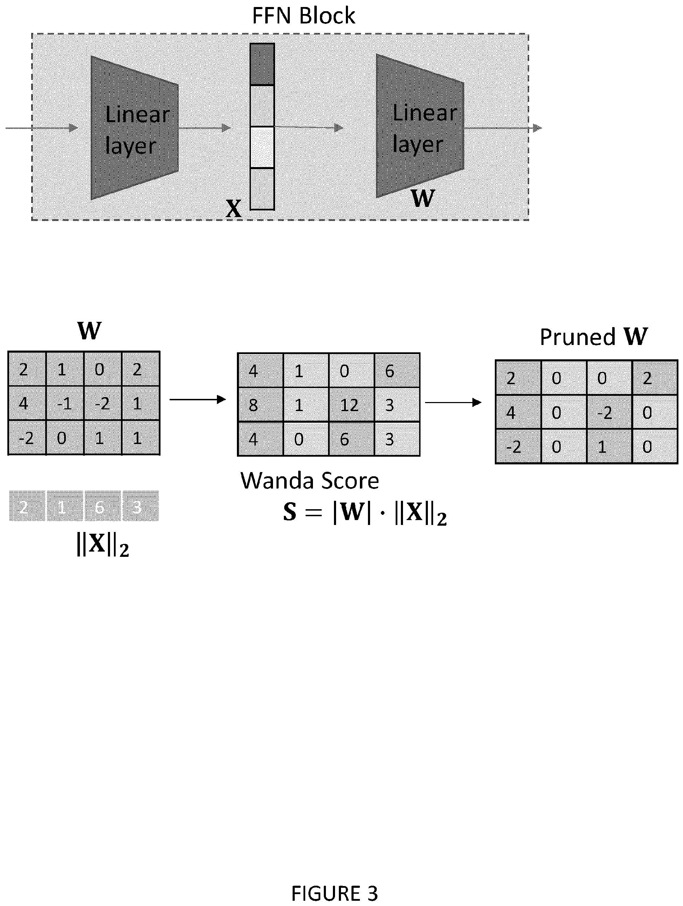

Pruning Strategy - Wanda: First, a recap of the pruning method Wanda for the large language models (LLMs) and its adaptation to diffusion models is provided. Figure 3 is a schematic diagram showing how a Wanda score is calculated and used to perform pruning. The weights of linear layer are denoted by $\mathbf{W} \in \mathbb{R}^{d_{out} \times d_{in}}$ and the input is denoted by $\mathbf{X} \in$

$\mathbb{R}^{B \times d_{in}}$, where $B$ is the number of data points, i.e. the number of prompts used in the present techniques. Unlike magnitude-based pruning, which considers the weights' magnitude alone, the concept behind the Wanda score is to estimate the combined effect of weights and the magnitude of features on neuron activations. Therefore, the importance of each weight is calculated as an element-wise product of its magnitude and the corresponding input feature-dimension-wise $\ell_2$ norm as shown in Equation 2:

$$\mathbf{S}(\mathbf{W}, \mathbf{X}) = |\mathbf{W}| \odot (\mathbf{1}^{d_{out}} \cdot \|\mathbf{X}\|_2) \in \mathbb{R}^{d_{out} \times d_{in}}. \qquad (2)$$

Here $|\cdot|$ is used to denote the absolute value operator, $\|\mathbf{X}\|_2$ computes the $\ell_2$ norm of each column of $\mathbf{X}$ and results in a $d_{in}$ dimensional vector, and $\odot$ represents element-wise matrix multiplication. Specifically, Eq 2 broadcasts $\|\mathbf{X}\|_2$ across different rows of $\mathbf{W}$ for computing the element-wise product in each row. For each row of $\mathbf{W}$, represented by $\mathbf{W}_{i,:}$ with corresponding Wanda score $\mathbf{S}(\mathbf{W}, \mathbf{X})_{i,:}$, the bottom-$k\%$ weights with the lowest scores are zeroed out, as shown in Figure 3 by the pruned $\mathbf{W}$. This process effectively induces sparsity in each row of the weights $\mathbf{W}$ by eliminating the bottom-$k\%$ of the weights, as a row is connected to a single activation in the output of a linear layer as a *per-output basis.* Elements of the weight matrix $\mathbf{W}$ are often referred to as *weight neurons,* which are different from neurons corresponding to the output of a layer. After pruning the least important weight neurons in a layer, subsequent layers in the model receive updated input activations. Wanda does not require any costly weight update since it solely relies on a calibration set to compute the feature norm matrix, which can be obtained with just a single forward pass through the model. The following will discuss how the present techniques use Wanda to prune each row's top-k% weight neurons for eliminating a concept.

Identifying Skilled Neurons in Latent Diffusion Models - Target and reference concept prompts: First, two sets of calibration prompts $\mathcal{P}^* = \{p_1^*, p_2^*, \dots, p_M^*\}$ and $\mathcal{P} = \{p_1, p_2, \dots p_M\}$ are defined using $M$ objects that can be generated by the model in target and reference concepts, respectively. Here, $p_i^*$ and $p_i$ represent prompts with the target and reference concepts, respectively. Objects represent common categories, including 'cat', 'dog', etc. To eradicate the target concept, e.g., "Van Gogh" painting style, a $p_i^*$ is formulated as 'a <object> in Van Gogh style' and a $p_i$ is formulated as 'a <object>'.

Identifying Skilled Neurons in Latent Diffusion Models - Importance score for **FFN** weights at time $t$: The process begins by collecting the neuron activations described in Eq 1, corresponding to the sets of target concept and reference prompts, and shaping them into matrices denoted by $\mathbf{H}_t^l(\mathcal{P}^*) = [\mathbf{h}_t^l(p_1^*)^T, \mathbf{h}_t^l(p_2^*)^T, \dots, \mathbf{h}_t^l(p_M^*)^T]$ and $\mathbf{H}_t^l(\mathcal{P}) = [\mathbf{h}_t^l(p_1)^T, \mathbf{h}_t^l(p_2)^T, \dots, \mathbf{h}_t^l(p_M)^T]$ such that $\mathbf{H}_t^l(\mathcal{P}^*), \mathbf{H}_t^l(\mathcal{P}) \in \mathbf{R}^{(M*N) \times d'}$. Note that this process only requires one forward pass for per prompt.

After collecting both sets of neuron activations, the importance score for the linear weight $\mathbf{W}^{l,2}$ in Eq 1 is calculated for both target and reference prompts using the methodology described above and in Eq 2 as

$$\mathbf{S}(\mathbf{W}^{l,2}, \mathbf{H}_t^l(\mathcal{P}^*)) = |\mathbf{W}^{l,2}| \odot (\mathbf{1}^d \cdot \|\mathbf{H}_t^l(\mathcal{P}^*)\|_2) \qquad (3)$$

$$\mathbf{S}(\mathbf{W}^{l,2}, \mathbf{H}_t^l(\mathcal{P})) = |\mathbf{W}^{l,2}| \odot (\mathbf{1}^d \cdot \|\mathbf{H}_t^l(\mathcal{P})\|_2)$$

For ease of notation, $\mathbf{S}(\mathbf{W}^{l,2}, \mathbf{H}_t^l(\mathcal{P}^*))$ and $\mathbf{S}(\mathbf{W}^{l,2}, \mathbf{H}_t^l(\mathcal{P}))$ are denoted as $\mathbf{S}_t^l(\mathcal{P}^*)$ and $\mathbf{S}_t^l(\mathcal{P})$ respectively in the following discussion. Following this, a skilled neuron is identified by comparing its importance score for the target concept prompt with that for the reference prompt.

Identifying Skilled Neurons in Latent Diffusion Models - Isolating concept-generating neurons at time $t$: Similar to Wanda, the present techniques adopt a *per-output comparison group,* which considers the importance scores among weights in each row of the weight matrix, rather than the matrix as a whole. Specifically, for a given sparsity level $k\%$, the top-$k\%$ important weight neurons for generating the target concept in row-$i$ denoted by $\mathbf{W}^{l,2}[i, :]$ is defined as

$$\mathbf{I}_t^l(\mathcal{P}^*)[i,j] = \begin{cases} 1 & \text{if } \mathbf{S}_t^l(\mathcal{P}^*)[i,j] \in \text{ top} - k\% \text{ of } \mathbf{S}_t^l(\mathcal{P}^*)[i,:] \\ 0 & \text{otherwise,} \end{cases} \qquad (4)$$

where $\mathbf{I}_t^l(\mathcal{P}^*)$ forms a binary mask matrix for the concept prompt set $\mathcal{P}^*$. As $\mathcal{P}^*$ contains additional undesired target

concepts compared with $\mathcal{P}$, $\mathbf{I}_t^l(\mathcal{P}^*)$ thus consists of the set of important neurons that are responsible for generating both the target and reference concepts. The next step involves filtering and disentangling these neurons to isolate them to generate the target concept and the reference separately. Continuing with comparison on the Wanda score matrices for both target and reference prompts sets, *skilled* neurons are now defined.

Definition 1: *For a linear layer characterized by $W^{l,2}$, the weight neuron $W^{l,2}[i, j]$ is defined as a skilled neuron at time step t if* $I_t^l[i,j](\mathcal{P}^*) == 1$ and $S_t^l(\mathcal{P}^*)[i,j] > S_t^l(\mathcal{P})[i,j]$.

In essence, if a weight neuron ranks within the top-k% Wanda scores among other neurons in a row of $\mathbf{W}^{l,2}$ for the target prompts P*, it contributes to generating either the undesired target concept or the reference concept. However, if its Wanda score surpasses that of a reference concept, it predominantly influences the target concept.

Subsequently, a time-dependent binary mask $\mathbf{M}_t^l$ over weight matrix $\mathbf{W}^{l,2}$ is formed such that

$$\mathbf{M}_t^l[i,j] = \begin{cases} 1 & \text{if weight neuron } \mathbf{W}^{l,2}[i,j] \text{ is skilled (Def. 1)} \\ 0 & \text{otherwise,} \end{cases} \qquad (5)$$

where $\mathbf{M}_t^l$ is a subset of $\mathbf{I}_t^l$ as only neurons that are highly activated by the target concept are retained.

Identifying Skilled Neurons in Latent Diffusion Models - Removing aggregated skilled neurons over timesteps: While time-dependent skilled neurons have been described, DiffPrune demonstrates that weights can be pruned by aggregating a pruning metric over a selected subset of timesteps based on relative importance scores. However, the present Applicant has discovered that simply aggregating the binary mask over the first $\hat{t}$ denoising iterations suffices to eliminate a concept while preserving the underlying object. Consequently, pruned weight matrix $\mathbf{W}^{l,2}$ is defined as

$$\widehat{\mathbf{W}}^{l,2} = \mathbf{W}^{l,2} \odot (\neg(\vee_{t=T,T-1,...,T-\hat{t}} \mathbf{M}_t^l)) \qquad (6)$$

where ∨ and ¬ denote the logical OR and NOT operators. All the weights of the pre-trained diffusion model $f_\theta$ remain unchanged as only $\mathbf{W}^{l,2}$ is substituted with pruned weights obtained from Equation 6. Experiments with the pruned model are performed to evaluate the effectiveness of concept removal, i.e. subsequently, only $\mathbf{W}^{l,2}$ is used for image sampling.

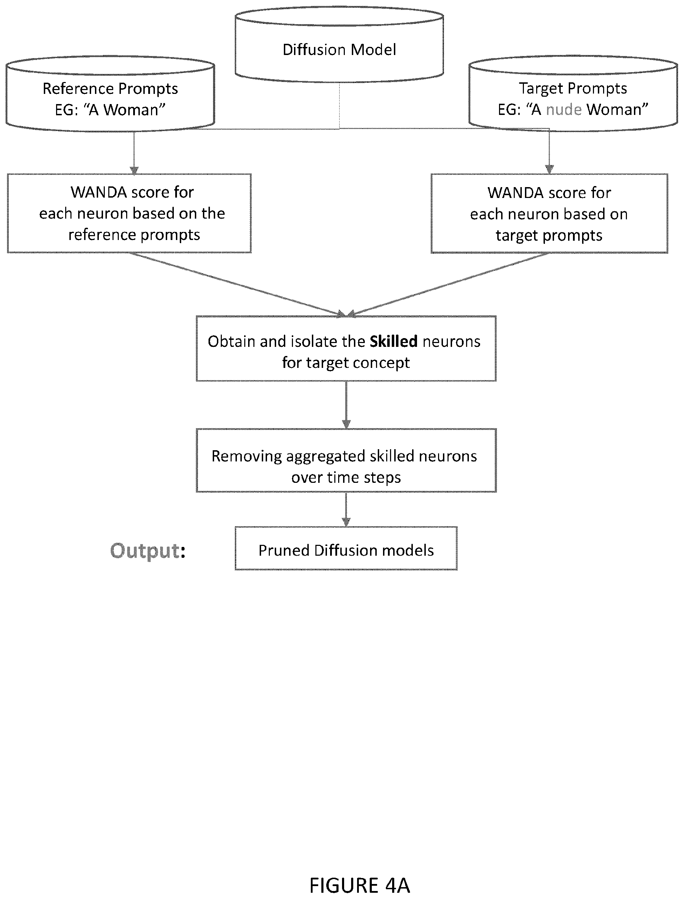

Figure 4A is a flowchart illustrating example steps to perform concept pruning. The present techniques use a feed-forward technique WANDA to compute the importance score of each candidate neuron within the Feed-forward Networks (FFNs) in (latent) Diffusion models for generating the images for each set of calibration prompts. The present techniques obtain skilled neurons for generating the (undesired) target concept by comparing the two sets of time dependent WANDA scores of (candidate) FFNs neurons for two sets of calibration prompts. Then, skilled neurons are isolated by forming binary masks. The present techniques aggregate the binary masks over the first $\hat{t}$ denoising iterations to eliminate a target concept while preserving the underlying object.

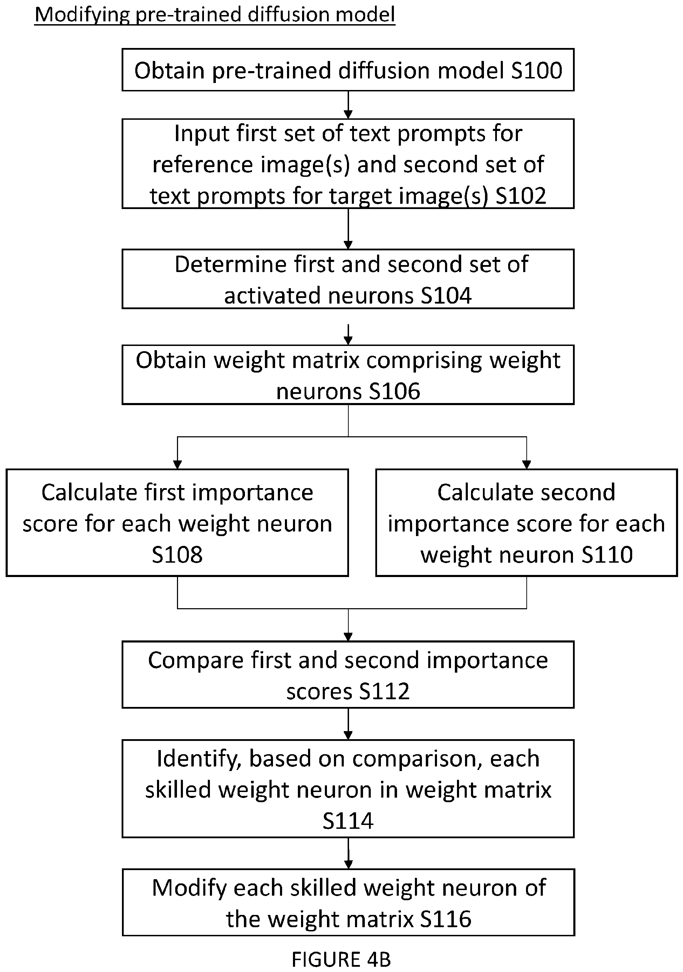

Figure 4B is a flowchart of example steps to modify a pre-trained diffusion model for image generation to remove undesired concepts from generated images. The method comprises: obtaining a pre-trained diffusion model, the diffusion model comprising a plurality of linear layers, each linear layer comprising at least one output neuron (step S100); inputting into the diffusion model, for each undesired concept, a first set of text prompts for generating reference images and a second set of text prompts for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept (step S102); determining, for at least one linear layer of the plurality of linear layers: a first set of activated neurons of the linear layer when the first set of text prompts is input, and a second set of activated neurons of the linear layer when the second set of text prompts is input (step S104); obtaining a weight matrix for the linear layer, wherein elements of the weight matrix are weight neurons, and wherein each row of the weight matrix is connected to a single output neuron in the linear layer (step S106); calculating, using the first set of activated neurons and the obtained weight matrix for the linear layer, a first importance score for each weight neuron of the weight matrix (step S108); calculating, using the second set of activated neurons and the obtained weight matrix for the linear layer, a second importance score for each weight neuron of the weight matrix (step S110); comparing the first importance score and second importance score for each weight neuron (step S112); identifying, based on the comparing, at least one skilled weight neuron from the second values of weight neurons in the weight matrix, wherein the at least one skilled weight neuron is responsible for the undesired concept (step S114); and modifying each identified skilled weight neuron in the weight matrix, to thereby provide a modified pre-trained diffusion model (step S116).

With respect to the step of obtaining a pre-trained diffusion model (step S100), any suitable diffusion model may be used. For example, a Stable Diffusion model may be used (as described below with respect to the experiments), but it will be understood that this is a non-limiting example of the type of diffusion model that could be modified by the present techniques to remove undesired concepts.

With respect to step S102 (inputting prompts), the first set and second set of text prompts preferably each contain a plurality of text prompts. This is because the importance score of each weight neuron is calculated using the elementwise product between the weight magnitude and the norm of input activations. Thus, multiple text prompts are required to ensure the skilled neurons are accurately identified for each undesired concept. The text prompt in the second set of text prompts includes the same undesired concept.

The step of determining the first and second set of neuron activations (step S104) may comprise determining the first and second set of neuron activations over a series of time steps. A single time step (i.e. a single forward pass) may be sufficient to per prompt to identify the skilled neurons. In some cases, multiple steps may be required. However, it will be understood, as noted above, that the full series of time steps is not needed because it is not necessary to actually generate images to identify the skilled neurons. This means that the step of identifying each skilled weight neuron may comprise identifying each skilled weight neuron over each time step of the series of time steps.

It will be understood that the present techniques can be used to prune skilled neurons from any linear layer of the diffusion model. Thus, where reference is made to a linear layer, it will be understood that the present techniques may be applied to multiple linear layers. That is, the steps shown in Figure 4B may be repeated or performed for each linear layer or multiple linear layers of the diffusion model. Furthermore, where reference is made to a weight matrix, it will be understood that the weight matrix is for a specific linear layer. Thus, the step of obtaining a weight matrix (S106) and then ultimately modifying elements of the weight matrix (step S116) is per linear layer. The values of the weight matrix for each linear layer are determined during the training of the diffusion model.

The step of identifying each skilled weight neuron (step S114) may comprise: identifying a set of weight neurons in each row of the weight matrix that is connected to each activated neuron in the second set of activated neurons (and which would be responsible for generating the target image when such an image is actually generated); and identifying, within the set of weight neurons, a subset of skilled weight neurons that are connected to each activated neuron in the second set of activated neurons and that are responsible for the undesired concept (i.e. responsible for generating the undesired concept in the target image when such an image is actually generated). Thus, the process may involve two stages. First, every weight neuron that is activated in response to the second set of text prompts is identified. At this stage, it is not clear which of those weight neurons are specifically linked to any undesired concept in the second set of text prompts. For example, if the undesired concept is nudity, at this stage it is unclear which weight neurons might be linked to activated neurons that are activated in response to the undesired concept (nudity) and which might be linked to activated neurons that are responsible for everything else (i.e. what is activated in response to the first set of text prompts). Thus, the second stage involves filtering and disentangling the skilled weight neurons from the weight neurons identified in the first stage. These two stages are now explained.

In the first stage, identifying (at each time step) the set of weight neurons that contribute to the generation of the target image may comprise: identifying, for each row, each weight neuron within the row having a second importance score that is within a top-k% of second importance scores for weight neurons in the row (see Equation 4 above). That is, only those weight neurons which are highly important for the second set of text prompts (and for eventually generating the target image) are considered. This helps to reduce the complexity of the problem of identifying the skilled weight neurons, because the weight neurons that are not important for the second set of text prompts (target image) and therefore, do not contribute strongly to the undesired concept(s) appearing in any target image, are filtered out. The importance of weight neurons in each row is considered (rather than in the weight matrix as a whole), because, as noted above, each row of the weight matrix is connected to a single output neuron in the linear layer. Thus, the present techniques seek to identify the weight neurons in each row that are responsible for activation/firing of the corresponding output neuron in the linear layer.

In the second stage, identifying (at each time step) a subset of skilled weight neurons may comprise, for each weight neuron in the set of weight neurons: comparing the first importance score and second importance score for each weight neuron and determining whether the second importance score for the weight neuron is higher than the first importance score for the weight neuron, which indicates that the weight neuron is responsible for an undesired concept (appearing in any eventual target image). (C.f. Definition 1 above). In other words, to identify the skilled weight neurons from the set of weight neurons, the importance scores of the weight neurons are used. If the second importance scores for a weight neuron is less than or equal to the first importance score for the weight neuron, then that weight neuron is not responsible for causing the undesired concept to appear in the target image. That is, the weight neuron is responsible for features that appear in both the reference image and the target image. If, on the other hand, the second importance score is greater than the first importance score for a specific weight neuron, then that weight neuron is responsible for a feature that only appears (or appears more strongly) in the target image, which is likely to be an undesired concept. In this way, the importance score is used to identify the skilled weight neurons. As noted below in more detail with reference to the Figures, the importance score may be a WANDA score.

Once the skilled weight neurons have been identified, it is necessary to modify them in the weight matrix so that the undesired concept is less likely to appear in future images generated by the diffusion model. As noted above, skilled weight neurons are not removed from the weight matrix for a particular layer, but are instead modified. For example, the modifying may include masking out the skilled weight neurons using a binary mask or binary mask matrix, which is a matrix of binary values (e.g. zeros and ones). See also Equation 5 above. Thus, the method may further comprise: generating a binary mask matrix for the weight matrix, wherein each element of the binary mask matrix corresponds to a weight neuron in the weight matrix; setting the value of an element in the binary mask matrix to be zero when the corresponding weight neuron in the weight matrix is identified as a skilled weight neuron; and setting the value of all other elements in the binary mask matrix to be one. In this way, the binary mask matrix masks out all the skilled weight neurons from the weight matrix, and no changes to the weight matrix itself need to be made.

As noted above, it is beneficial to utilise the binary mask matrix generated at each time step. Thus, the method may further comprise: aggregating the binary mask matrix generated at each time step of the series of time steps. Any suitable way of aggregating the binary mask matrix from each time step may be used. One example technique is described below with respect to the Figures, in which the value of an element in an aggregated binary mask matrix is set as one if any of the corresponding elements from the masks for the different time steps is one. In other words, a logical OR operation is used to perform the aggregation, on an element-by-element basis. (See also Equation 6 above).

In some cases, the aggregating may be performed for a pre-defined number of initial time steps of the series of time steps. That is, it may be sufficient for the purpose of eliminating undesired concepts to focus on the binary mask matrices generated for the first few time steps in the series of time steps. This also makes the process more computationally efficient, which allows undesired concepts to be removed quickly.

As noted above, removing each identified skilled weight neuron may comprise: applying the aggregated binary mask matrix to the weight matrix, thereby removing each identified skilled weight neuron from the weight matrix.

More specifically, applying the aggregated binary mask matrix to the weight matrix may comprise: setting a value of each weight neuron in the weight matrix to zero when the corresponding element in the binary mask matrix is zero; and retaining an original value of all other weight neurons in the weight matrix. In this way, the original values of the weight neurons in the weight matrix are retained if they correspond to unskilled neurons, and are removed (set to zero) when they are skilled neurons.

**In some** cases, when multiple binary masks are to be aggregated, instead of setting the mask values for skilled neurons to be zero, they may be set to one (and equivalently, the mask values for unskilled neurons may be set to zero instead of one). This may be for ease and efficiency of the subsequent computations, i.e. the aggregation. This is because there are many fewer skilled neurons than unskilled neurons, so at this stage, it may be simpler to set the value of the elements of the mask matrix corresponding to the skilled neurons to one, to introduce sparsity in the binary mask matrix. (Sparse matrices are those which contain mostly zeros). This reduces the complexity when aggregating multiple binary masks. Then, when the aggregated binary mask matrix is applied to the weight matrix, a logical NOT operation is needed to ensure the right neurons, i.e. the skilled neurons, are pruned from the weight matrix. That is, although in the binary mask matrices for the time steps, and in the aggregated binary mask matrix, each element with a value of one represented a skilled neuron, in order to remove the skilled neurons, the logical NOT operation needs to be applied so that the skilled neurons are zeroed-out in the weight matrix.

The step (S108, S110) of calculating the first and second importance scores for each weight neuron may comprise: calculating, for each weight neuron, an element-wise product of a magnitude of the weight neuron (i.e. an absolute value of the weight neuron) and an input feature-dimension-wise $\ell_2$ norm. E.g. given a input $\mathbf{X} \in \mathbf{R}^{\{B \times d\}}$, where B is the number of data points, i.e. the number of prompts, the input feature-dimension-wise $\ell_2$ norm computes the $\ell_2$ norm of each column of X and results in a d dimensional vector. (Since the scores require calculating a norm of each input activation $\mathbf{X}$, it is clear that a set of prompts are used to determine the activations).

Experiments

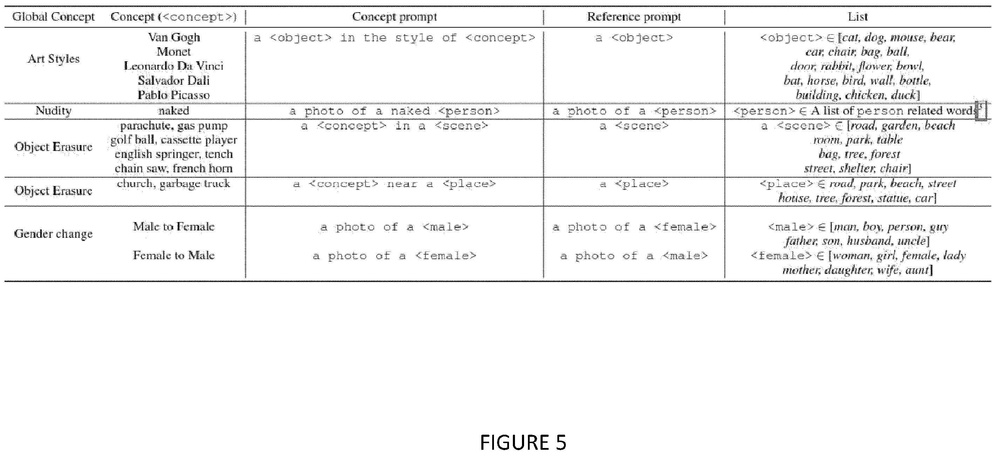

Experiment details: The present techniques work with Stable Diffusion v1.5 (SD), which includes 16 FFN layers that serve as candidates for skilled neuron discovery and pruning. The experiments begin by formulating the calibration sets $\mathcal{P}^*$ and $\mathcal{P}$ that are used to obtain the matrices $\mathbf{H}_t^l(\mathcal{P}^*)$ and $\mathbf{H}_t^l(\mathcal{P})$ for calculating the score in Equation 3. Figure 5 is a table showing a calibration set formulation for different concepts. Specifically, the Figure shows a list of prompts and the exact structure of the sentences for different concepts. All the concepts considered herein are categorised into global/higher level concepts like art styles, nudity, object erasure, and gender change. The Figure also shows the sentence structure of the target/concept prompts P* and reference prompts $\mathcal{P}$.

Pruning candidates: The selection of FFN second layer for pruning was informed by an ablation study conducted across various layers within the UNet, aimed at identifying the most effective pruning targets. Specifically, the first layer of the FFNs was analyzed, along with the query, key, and value weight matrices in all cross-attention layers. The results indicate that the second layer of the FFNs proves to be a more effective pruning candidate compared to other layers. This observation aligns with findings in the LLM literature, where these layers have also been identified as prime candidates for skill discovery and pruning. Finally, to calculate neuron activations, the model is run for 50 denoising iterations and the seed is fixed before every forward pass to ensure the same initializations for both reference and target concept prompts.

Hyper-parameter selection: As discussed above, two key hyperparameters are selected - sparsity level $k\%$ and $\hat{t}$ - for aggregating skilled neurons across time steps. For each concept, the sparsity parameter $k\%$ is varied between 0.5% and 5%, and the value that achieves the best trade-off between concept erasure and the retention of unrelated concepts is chosen. Interestingly, the experiments reveal that $\hat{t} = 10$ is typically sufficient for erasing concepts while preserving objects, suggesting that low-level features such as style and objects are formed early in the denoising process, with fine-grained details being added later.

Baselines: The following concept editing works are identified as being relevant for the comparison experiments: UCE, ESD, Forget-Me-Not (FMN), and Concept Ablation (CA). While ESD, UCE, and FMN experiment with erasing artist styles, objects, and nudity, CA does not evaluate their method on nudity and the same objects. Therefore, a baseline is only included if their method has been evaluated for that concept and is reproducible from their source code.

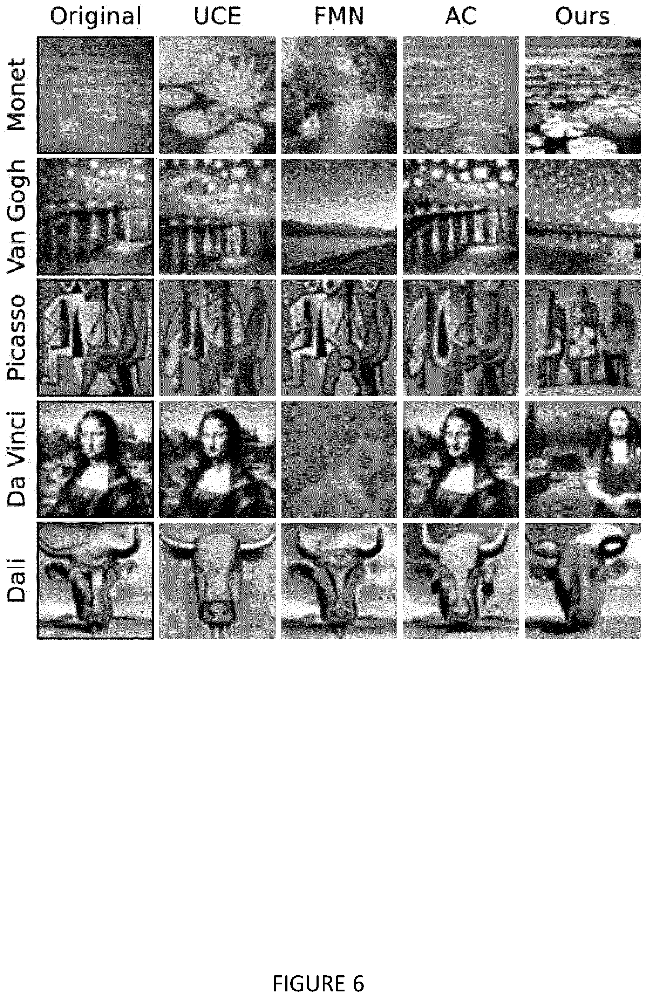

Erasing Artistic Styles: Five artists are considered - *Van Gogh, Claude Monet, Pablo Picasso, Leonardo Da Vinci,* and *Salvador Dali.* To measure the efficacy of concept removal, a dataset of 50 prompts for each artist is created using ChatGPT, consisting of the names of their paintings followed by the name of the artist. To measure the efficacy of concept removal, two metrics are reported: the *CLIP Similarity,* which measures the similarity between the generated image and the prompt, and a stricter *CLIP score* that penalizes a model when the similarity between the image generated by the concept-editing and the prompt is greater than the similarity between the image generated by the pre-trained SD and prompt. Lower values of *CLIP Similarity* and higher values of *CLIP Score* indicate better concept removal. The fidelity of general purpose image generation is also evaluated by measuring FID and *CLIP Similarity* on the COCO30k dataset. Figure 6 shows qualitative examples that demonstrate the strong erasing capabilities of the present techniques with high-quality realistic output images.

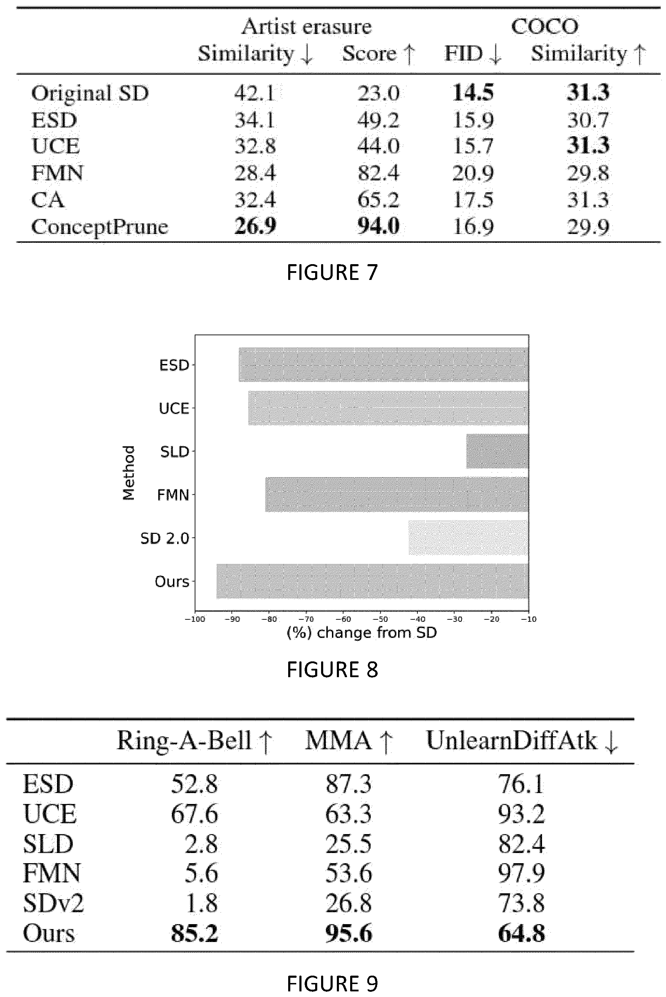

Figure 7 is a table showing quantitative results of artist style removal over five artist styles, that demonstrate the strong erasing capabilities of ConceptPrune with high-quality realistic output images. CLIP Similarity and CLIP Accuracy measure art style removal. FID and CLIP Similarity on COCO30k measure fidelity for unrelated retained concepts. The present techniques (ConceptPrune) can effectively erase artist styles without compromising the model's performance on unrelated concepts. From the quantitative results presented in Figure 7, it is demonstrated that the present method outperforms other baselines in artist style removal while effectively retaining unrelated concepts, as indicated by the low FID score.

Erasing Explicit Content: The present techniques are qualitatively evaluated for moderating Not-Safe-for-Work (NSFW) concepts like nudity, by comparing the present techniques against the concept-erasing baselines ESD, UCE, and FMN. In addition, a comparison is also made with variants of Stable Diffusion, such as Safe Latent Diffusion (SLD) and Stable Diffusion 2.0, which have been fine-tuned on a filtered subset of LAION without explicit images. The Inappropriate Prompts Dataset (I2P) is used, which consists of 4703 prompts featuring various inappropriate concepts. Nudity detectors indicate that, out of these 4703 prompts, the pre-trained Stable Diffusion model generates nudity for 796 prompts. Figure 8 is chart showing explicit content erasure, in which the percentage reduction in the number of generated images with nudity is reported, compared to the pre-trained Stable Diffusion model. ConceptPrune generates nudity in merely 47 prompts within 4703 prompts in the I2P dataset, implying a 94.1% decrease compared to 88% in ESD and 85.6% in UCE, demonstrating a significant improvement over other baselines in content moderation.

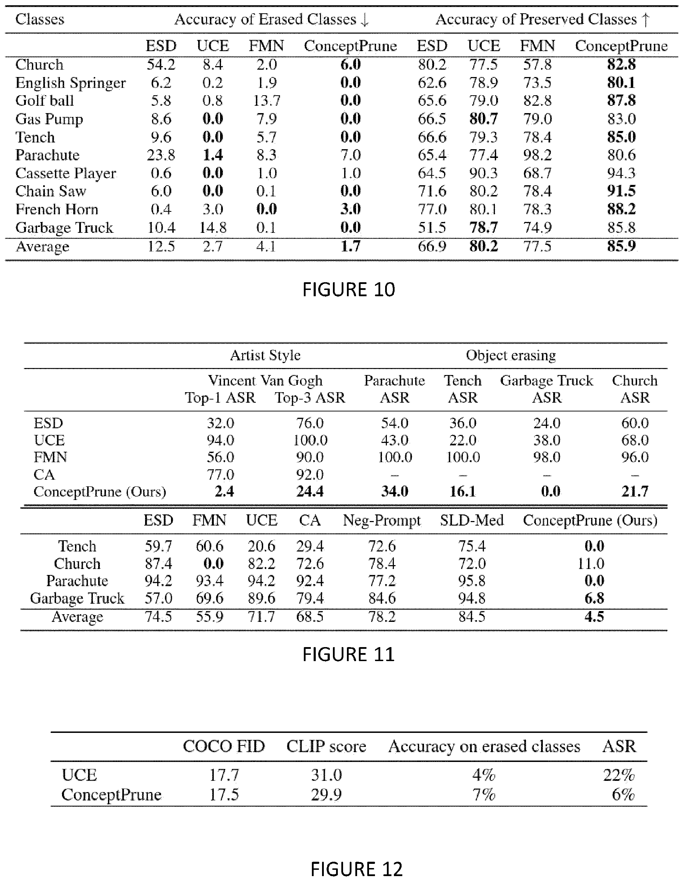

Erasing Objects - single-object erasing: The effectiveness of the present method in removing objects from the learned concepts of diffusion models is showcased. Experiments targeting ImageNette classes, a subset of ImageNet comprising 10 classes, were performed. Similar to UCE and ESD, 500 images per class were generated, and the top-1 classification accuracy was evaluated using a pre-trained ResNet-50. Figure 10 is a table showing that ConceptPrune has superior erasure performance on average while effectively minimizing interference on non-targeted classes.

Erasing Objects - multi-object erasing: In addition to single-object erasing, ConceptPrune is also evaluated on removing multiple objects from the model simultaneously. Although the present pruning strategy generates a pruning mask for concepts individually, it provides a straightforward baseline for multi-object erasing by taking the union of skilled neurons across different concepts. The present method is compared with UCE and the accuracy on erased classes is reported along with FID and CLIP similarity on COCO30k. Figure 12 is a table showing quantitative results for multi-object erasure. The table shows Accuracy on erased classes and FID on COCO30k, CLIP similarity on COCO30k, and ASR of UnlearnDiffAtk. ConceptPrune is comparable to UCE at erasing multiple objects and outperforms UCE in retaining image generation capabilities along with being significantly robust to white-box adversaries. Thus, Figure 12 shows that ConceptPrune demonstrates comparable erasing performance while excelling at retaining unrelated concepts.

Adversarial Defence on Concept Erasure Attacks - white-box attacks: Recent research has recognized the limitations of the concept editing baselines considered in this paper, namely UCE, ESD, FMN, and CA. Model-based adversarial attacks like UnlearnDiffAtk and Concept Inversion (CI) have demonstrated that subtle perturbations to text prompts can circumvent the unlearning mechanisms, compelling concept-editing baselines to generate harmful images with undesired concepts once again. Furthermore, these studies show a near-perfect Attack Success Rate (ASR) for FMN and UCE which jeopardizes the safety and effectiveness of these baselines in real-world settings.

ConceptPrune is evaluated under these recently introduced white-box attacks - UnlearnDiffAtk and Concept Inversion (CI). For UnlearnDiffAtk, evaluation is conducted for Van Gogh style, ImageNette objects, and nudity. ConceptPrune is compared with baselines UCE, ESD, and FMN across all concepts, and for nudity, comparisons with presumably safe models such as Safe Latent Diffusion (SLD) and SDv2 are included. The top-1 and top-3 ASR is reported for Van Gogh style, which indicates whether the generated image is classified as the top-1 prediction or within the top-3 predictions for Van Gogh's painting style when evaluated by the post-generation image classifier. For object erasure and NSFW attacks, ASR is reported based on a pre-trained ResNet50 model and NudeNet detector respectively. Figure 11 is a table showing that ConceptPrune is substantially more robust to adversarial attacks aimed at eliciting erased concepts. Figure 11 (Top) shows Attack Success Ratio (ASR %) of UnlearnDiffAtk adversarial prompts for Van Gogh's painting style and 4 classes of the Imagenette dataset. Figure 11 (Bottom) shows Top-1 classification accuracy under CI for 4 Imagenette classes.

More specifically, Figure 11 (top) iillustrates that for artist style and object erasure, ConceptPrune renders the UnlearnDiffAtk unsuccessful, even achieving a 0% ASR in one instances, in contrast to the perfect success rates seen for baselines like UCE and FMN. Figure 9 is a table showing that ConceptPrune demonstrates robustness to adversarial attacks. Unlearning methods evaluated against three adversarial attacks. Black-box (Ring-A-Bell and MMA) performance is quantified by percentage reduction in nude samples compared to SD. White-box UnlearnDiffAtk performance measures the attack success rate (ASR) Specifically, Figure 9 shows that while UCE, ESD, and FMN fail to defend against the NSFW attack, ConceptPrune demonstrates an ASR of 64.8%, significantly lower than that the models that are trained for safety (SDv2 and SLD).

Following the evaluation protocol of Concept Inversion (CI), 500 images per class were generated and the top-1 classification accuracy was evaluated. Similar to CI, the performance of ConceptPrune is also compared against negative prompting (Neg-Prompt) and Safe Latent Diffusion (SLD-Med). In Figure 11 (bottom), it is observed that the accuracy of 3 out of 4 erased classes is notably lower compared to other baselines. This demonstrates that ConceptPrune offers significantly greater adversarial robustness against various white-box attack variants.

Adversarial Defence on Concept Erasure Attacks -black-box attacks: To prevent the generation of NSFW imagery, SD models incorporate preventive measures such as prompt filters and post-synthesis safety checks by default. In a black-box setting such as a web service, these defenses are considered impossible to override. Therefore, ConceptPrune is also evaluated for black-box robustness. Recent research MMA-Diffusion released a set of 1000 adversarial prompts for SDv1.5 that circumvent safety filters on the text and image level. In addition, Ring-A-Bell directly challenges ESD, UCE, and FMN and attacks their erasing strength with their set of adversarial prompts. Inspired by these works, ConceptPrune is evaluated on adversarial prompts released by MMA-Diffusion and Ring-A-Bell, and the percentage reduction in number of images for which nudity is generated is reported as compared to pre-trained SD. Results in Figure 9 show that ConceptPrune offers a stark increase in adversarial robustness with a 95.6% decrease in the generation of nudity under MMA. This underscores its potential as a reliable and safe choice over existing techniques.

Further Analysis

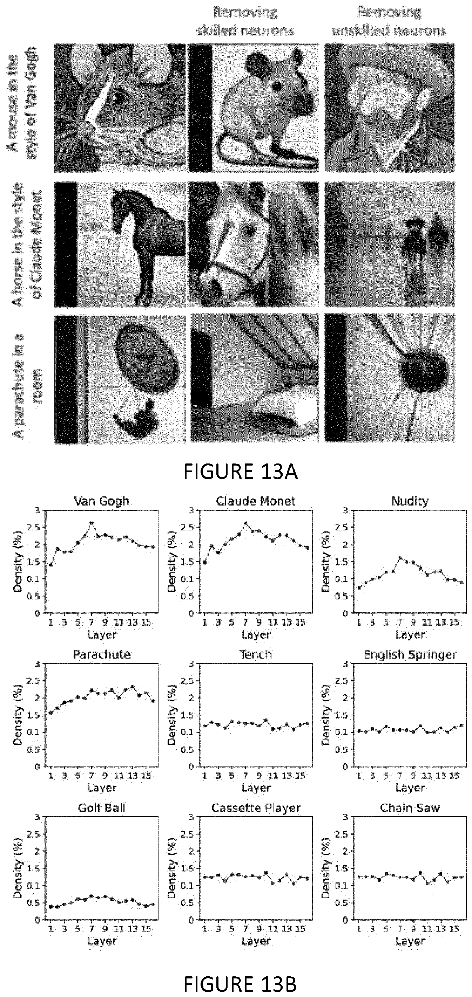

Analysing the density of skilled neurons: The *density* of skilled neurons is evaluated, defined as the percentage of non-zero elements in the pruning mask in Equation 5. The analysis in Figure 13A reveals that concept-generating neurons span less than 3% of the FFN weights matrix considered for pruning. For example, removing "Van Gogh" skilled neurons erases the "Van Gogh" style while removing unskilled neurons eliminates the object. This suggests that concept generation can be attributed to a very tiny subspace, potentially constituting less than 0.12% of the total model parameters in diffusion models.

Are concept-generating skilled neurons disentangled from object-generating neurons? Above, it was demonstrated that ConceptPrune exhibits strong concept erasure skills for a diverse range of concepts by discovering and pruning a compact subspace of skilled neurons. Conversely, removing unskilled neurons, i.e neurons that satisfy the opposite of the second condition in Definition 1 and follow $\mathbf{S}_t^l(\mathcal{P}^*)[i,j] < \mathbf{S}_t^l(\mathcal{P})[i,j]$ instead are hypothesised to distort the reference concept while retaining the target concept. Figure 13B offers qualitative examples that confirm the hypothesis, illustrating the ability of the present techniques to isolate a distinct set of neurons solely responsible for generating concepts, demonstrating their disentanglement from neurons responsible for generating general utilities.

Are there specific neurons responsible for generating gender? In addition to style, object, and nudity generating neurons, ConceptPrune can also identify a distinct set of "male" neurons by comparing concept prompts such as P* ({a man, a boy}) against reference prompts like $\mathcal{P}$ ({a woman, a girl}), and vice-versa. It is demonstrated that ConceptPrune allows for the selective removal of male neurons to generate female images or the reverse. ConceptPrune is not proposed as a practical solution for mitigating gender bias. Instead, the primary objective is to emphasize the compelling discovery of

a distinct set of gender-specific neurons within the model.

<u>Can ConceptPrune generalize to other architectures?</u> It is demonstrated that ConceptPrune can be seamlessly applied to Stable Diffusion v2.0. The artist styles listed in the table shown in Figure 7 were erased and the results compared with UCE on SD-v2.0.

The present techniques revisit the important challenge of concept editing in pre-trained diffusion models from the perspective of skilled neuron identification and pruning. It is shown that concepts related to object categories, art styles, gender, and nudity can be identified and pruned - leading to effective erasure while maintaining overall generation quality. The present ConceptPrune approach is fast, training-free, and permanent - exhibiting strong robustness to adversarial attacks that break prior concept erasure methods. Without relying on token-rewriting, pruned models could be distributed without the risk of adversaries simply removing rewriting safeguards. It is believed that this result and capability will be valuable for the research and industrial communities to make socially responsible use of diffusion models going forward.

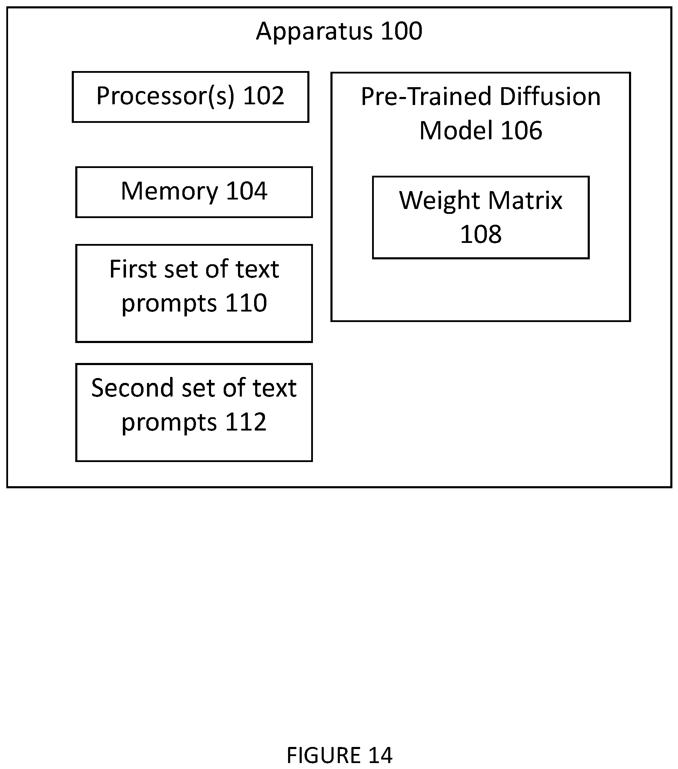

Figure 14 is a block diagram of an apparatus 100 for modifying a pre-trained diffusion model. The apparatus 100 comprises: at least one processor 102 coupled to memory 104, arranged for: obtaining a pre-trained diffusion model 106, the diffusion model comprising a plurality of linear layers, each linear layer comprising at least one output neuron; inputting into the diffusion model 106, for each undesired concept, a first set of text prompts 110 for generating reference images and a second set of text prompts 112 for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept; determining, for at least one linear layer of the plurality of linear layers: a first set of activated neurons of the linear layer when the first set of text prompts is input, and a second set of activated neurons of the linear layer when the second set of text prompts is input; obtaining a weight matrix 108 for the linear layer, wherein elements of the weight matrix are weight neurons, and wherein each row of the weight matrix is connected to a single output neuron in the linear layer; calculating, using the first set of activated neurons and the obtained weight matrix for the linear layer, a first importance score for each weight neuron of the weight matrix; calculating, using the second set of activated neurons and the obtained weight matrix for the linear layer, a second importance score for each weight neuron of the weight matrix; comparing the first importance score and second importance score for each weight neuron; identifying, based on the comparing, at least one skilled weight neuron from the second values of weight neurons in the weight matrix, wherein the at least one skilled weight neuron is responsible for the undesired concept; and modifying each identified skilled weight neuron in the weight matrix 108, to thereby provide a modified pre-trained diffusion model.

References:

- Stable Diffusion - Robin Rombach, Andreas Blattmann, Dominik Lorenz, Patrick Esser, and Björn Ommer. High resolution image synthesis with latent diffusion models. arXiv, 2021.
- UNet - Olaf Ronneberger, Philipp Fischer, and Thomas Brox. U-net: Convolutional networks for biomedical image segmentation. arXiv, 2015.
- GEGLU - Noam Shazeer. Glu variants improve transformer. arXiv, 2020.
- Wanda - Mingjie Sun, Zhuang Liu, Anna Bair, and J. Zico Kolter. A simple and effective pruning approach for large language models. arXiv, 2024.
- DiffPrune - Gongfan Fang, Xinyin Ma, and Xinchao Wang. Structural pruning for diffusion models. arXiv, 2023.
- UCE - Rohit Gandikota, Hadas Orgad, Yonatan Belinkov, Joanna Materzy'nska, and David Bau. Unified concept editing in diffusion models. arXiv preprint arXiv:2308.14761, 2023b.
- ESD - Rohit Gandikota, Joanna Materzy'nska, Jaden Fiotto-Kaufman, and David Bau. Erasing concepts from diffusion models. In Proceedings of the 2023 IEEE International Conference on Computer Vision, 2023a.
- Forget-Me-Not (FMN) - Eric Zhang, KaiWang, Xingqian Xu, ZhangyangWang, and Humphrey Shi. Forget-me-not: Learning to forget in text-to-image diffusion models. arXiv preprint arXiv:2211.08332, 2023a.
- Concept Ablation (CA) - Nupur Kumari, Bingliang Zhang, Sheng-Yu Wang, Eli Shechtman, Richard Zhang, and Jun-Yan Zhu. Ablating concepts in text-to-image diffusion models. In International Conference on Computer Vision (ICCV), 2023.
- Safe Latent Diffusion (SLD) - Patrick Schramowski, Manuel Brack, Björn Deiseroth, and Kristian Kersting. Safe latent diffusion: Mitigating inappropriate degeneration in diffusion models. In Proceedings of the IEEE Conference on Computer Vision and Pattern Recognition (CVPR), 2023.
- Stable Diffusion 2.0 - Robin Rombach, Andreas Blattmann, Dominik Lorenz, Patrick Esser, and Björn Ommer. High resolution image synthesis with latent diffusion models. In Proceedings of the IEEE/CVF Conference on Computer Vision and Pattern Recognition (CVPR), pp. 10684-10695, June 2022a
- Inappropriate Prompts Dataset (I2P) - Patrick Schramowski, Manuel Brack, Björn Deiseroth, and Kristian Kersting.

Safe latent diffusion: Mitigating inappropriate degeneration in diffusion models. In Proceedings of the IEEE Conference on Computer Vision and Pattern Recognition (CVPR), 2023.

- ImageNette classes - Jeremy Howard and Sylvain Gugger. Fastai: A layered api for deep learning. Information, 11(2):108, February 2020. ISSN 2078-2489. doi: 10.3390/info11020108. URL http://dx.doi.org/10.3390/info11020108.
- ImageNet - Jia Deng, Wei Dong, Richard Socher, Li-Jia Li, Kai Li, and Fei-Fei Li. Imagenet: a large-scale hierarchical image database. pp. 248-255, 06 2009. doi: 10.1109/CVPR.2009.5206848.
- ResNet-50 - Kaiming He, Xiangyu Zhang, Shaoqing Ren, and Jian Sun. Deep residual learning for image recognition. arXiv, 2015.
- UnlearnDiffAtk - Yimeng Zhang, Jinghan Jia, Xin Chen, Aochuan Chen, Yihua Zhang, Jiancheng Liu, Ke Ding, and Sijia Liu. To generate or not? safety-driven unlearned diffusion models are still easy to generate unsafe images... for now. arXiv preprint arXiv:2310.11868, 2023d.
- Concept Inversion (CI) - Minh Pham, Kelly O. Marshall, and Chinmay Hegde. Circumventing concept erasure methods for text-to-image generative models. arXiv, 2023.
- negative prompting (Neg-Prompt) - Ban Yuanhao, Wang Ruochen, Zhou Tianyi, Cheng Minhao, Gong Boqing, and Hsieh Cho-Jui. Understanding the impact of negative prompts: When and how do they take effect? In arXiv preprint, 2024.
- Safe Latent Diffusion (SLD-Med) - Patrick Schramowski, Manuel Brack, Björn Deiseroth, and Kristian Kersting. Safe latent diffusion: Mitigating inappropriate degeneration in diffusion models. In Proceedings of the IEEE Conference on Computer Vision and Pattern Recognition (CVPR), 2023.
- MMA-Diffusion - Yijun Yang, Ruiyuan Gao, Xiaosen Wang, Nan Xu, and Qiang Xu. Mma-diffusion: Multimodal attack on diffusion models. arXiv preprint arXiv:2311.17516, 2023.
- Ring-A-Bell - Yu-Lin Tsai, Chia-Yi Hsu, Chulin Xie, Chih-Hsun Lin, Jia-You Chen, Bo Li, Pin-Yu Chen, Chia-Mu Yu, and Chun-Ying Huang. Ring-a-bell! how reliable are concept removal methods for diffusion models? arXiv, 2024.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. A computer-implemented method for modifying a pre-trained diffusion model used for image generation to remove undesired concepts being included in images generated by the model, the method comprising:

   obtaining a pre-trained diffusion model, the diffusion model comprising a plurality of linear layers, each linear layer comprising at least one output neuron;

   inputting into the diffusion model, for each undesired concept, a first set of text prompts for generating reference images and a second set of text prompts for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept;

   determining, for at least one linear layer of the plurality of linear layers:

   a first set of activated neurons of the linear layer when the first set of text prompts is input, and
   a second set of activated neurons of the linear layer when the second set of text prompts is input;

   obtaining a weight matrix for the linear layer, wherein elements of the weight matrix are weight neurons, and wherein each row of the weight matrix is connected to a single output neuron in the linear layer;

   calculating, using the first set of activated neurons and the obtained weight matrix for the linear layer, a first importance score for each weight neuron of the weight matrix;

   calculating, using the second set of activated neurons and the obtained weight matrix for the linear layer, a second importance score for each weight neuron of the weight matrix;

   comparing the first importance score and second importance score for each weight neuron;

   identifying, based on the comparing, at least one skilled weight neuron from the second values of weight neurons in the weight matrix, wherein the at least one skilled weight neuron is responsible for the undesired concept; and

modifying each identified skilled weight neuron in the weight matrix, to thereby provide a modified pre-trained diffusion model.

2. The method as claimed in claim 1 wherein the first set and second set of text prompts each contain a plurality of text prompts, and wherein each text prompt in the second set of text prompts includes the same undesired concept.

3. The method as claimed in claim 1 or 2 wherein:

determining the first and second set of activated neurons comprises determining the first and second set of activated neurons over a series of time steps; and
identifying each skilled weight neuron comprises identifying each skilled weight neuron over each time step of the series of time steps.

4. The method as claimed in any of claims 1, 2 or 3 wherein identifying each skilled weight neuron comprises:

identifying a set of weight neurons in each row of the weight matrix that is connected to each activated neuron in the second set of activated neurons; and
identifying, within the set of weight neurons, a subset of skilled weight neurons that are connected to each activated neuron in the second set of activated neurons and that are responsible for the undesired concept.

5. The method as claimed in claim 4 wherein identifying the set of weight neurons comprises:
identifying, for each row, each weight neuron within the row having a second importance score that is within a top-k% of second importance scores for weight neurons in the row.

6. The method as claimed in claim 4 or 5 wherein identifying a subset of skilled weight neurons comprises:
for each weight neuron in the set of weight neurons:
comparing the first importance score and second importance score for each weight neuron and determining whether the second importance score for the weight neuron is greater than the first importance score for the weight neuron, which indicates that the weight neuron is responsible for an undesired concept.

7. The method as claimed in claim 4, 5 or 6 wherein, at each time step, the method further comprises:

generating a binary mask matrix for the weight matrix, wherein each element of the binary mask matrix corresponds to a weight neuron in the weight matrix;
setting the value of an element in the binary mask matrix to be zero when the corresponding weight neuron in the weight matrix is identified as a skilled weight neuron; and
setting the value of all other elements in the binary mask matrix to be one.

8. The method as claimed in claim 7 further comprising:
aggregating the binary mask matrix generated at each time step of the series of time steps.

9. The method as claimed in claim 8 wherein the aggregating is performed for a pre-defined number of initial time steps of the series of time steps.

10. The method as claimed in claim 8 or 9 wherein removing each identified skilled weight neuron comprises:
applying the aggregated binary mask matrix to the weight matrix, thereby removing each identified skilled weight neuron from the weight matrix.

11. The method as claimed in claim 10 wherein applying the aggregated binary mask matrix to the weight matrix comprises:

setting a value of each weight neuron in the weight matrix to zero when the corresponding element in the binary mask matrix is zero; and
retaining an original value of all other weight neurons in the weight matrix.

12. The method as claimed in any preceding claim wherein calculating the first and second importance scores for each weight neuron comprises:
calculating, for each weight neuron, an element-wise product of a magnitude of the weight neuron and an input

feature-dimension-wise $\ell_2$ norm.

13. An apparatus for modifying a pre-trained diffusion model used for image generation to remove undesired concepts being included in images generated by the model, the apparatus comprising:

at least one processor coupled to memory, arranged for:

obtaining a pre-trained diffusion model, the diffusion model comprising a plurality of linear layers, each linear layer comprising at least one output neuron;

inputting into the diffusion model, for each undesired concept, a first set of text prompts for generating reference images and a second set of text prompts for generating target images, wherein each text prompt in the first set of text prompts is paired with a text prompt in the second set of text prompts, and each pair of text prompts contains an object to be depicted in the generated reference and target images, and wherein each text prompt in the second set of text prompts includes an undesired concept;

determining, for at least one linear layer of the plurality of linear layers:

a first set of activated neurons of the linear layer when the first set of text prompts is input, and
a second set of activated neurons of the linear layer when the second set of text prompts is input;

obtaining a weight matrix for the linear layer, wherein elements of the weight matrix are weight neurons, and wherein each row of the weight matrix is connected to a single output neuron in the linear layer;

calculating, using the first set of activated neurons and the obtained weight matrix for the linear layer, a first importance score for each weight neuron of the weight matrix;

calculating, using the second set of activated neurons and the obtained weight matrix for the linear layer, a second importance score for each weight neuron of the weight matrix;

comparing the first importance score and second importance score for each weight neuron;

identifying, based on the comparing, at least one skilled weight neuron from the second values of weight neurons in the weight matrix, wherein the at least one skilled weight neuron is responsible for the undesired concept; and

modifying each identified skilled weight neuron in the weight matrix, to thereby provide a modified pre-trained diffusion model.

14. The apparatus as claimed in claim 13 wherein the apparatus is a user apparatus, and further comprises:
at least one interface for receiving, from a user of the user apparatus, the first text prompt and the second text prompt, where the second text prompt relates to a user-specific undesired concept.

15. A computer-readable storage medium comprising instructions which, when executed by a processor, causes the processor to carry out the method of any of claims 1 to 13.

FIGURE 1

FIGURE 2

## FFN Block

## W

$$\|X\|_2$$

## Wanda Score

$$S = |W| \cdot \|X\|_2$$

## Pruned W

FIGURE 3

Diffusion Model

Reference Prompts
EG: "A Woman"

Target Prompts
EG: "A nude Woman"

WANDA score for
each neuron based on the
reference prompts

WANDA score for
each neuron based on
target prompts

Obtain and isolate the **Skilled** neurons
for target concept

Removing aggregated skilled neurons
over time steps

Output:

Pruned Diffusion models

FIGURE 4A

## Modifying pre-trained diffusion model

```
┌─────────────────────────────────────────┐
│   Obtain pre-trained diffusion model S100 │
└─────────────────────────────────────────┘
                    │
                    ▼
┌─────────────────────────────────────────┐
│      Input first set of text prompts for  │
│     reference image(s) and second set of  │
│    text prompts for target image(s) S102  │
└─────────────────────────────────────────┘
                    │
                    ▼
┌─────────────────────────────────────────┐
│      Determine first and second set of    │
│           activated neurons S104          │
└─────────────────────────────────────────┘
                    │
                    ▼
┌─────────────────────────────────────────┐
│    Obtain weight matrix comprising weight │
│                neurons S106               │
└─────────────────────────────────────────┘
```

┌──────────────────────────────┐     ┌──────────────────────────────┐
│    Calculate first importance │     │      Calculate second         │
│   score for each weight neuron│     │   importance score for each   │
│              S108             │     │       weight neuron S110      │
└──────────────────────────────┘     └──────────────────────────────┘

```
┌─────────────────────────────────────────┐
│    Compare first and second importance    │
│                scores S112                │
└─────────────────────────────────────────┘
                    │
                    ▼
┌─────────────────────────────────────────┐
│     Identify, based on comparison, each   │
│    skilled weight neuron in weight matrix │
│                   S114                    │
└─────────────────────────────────────────┘
                    │
                    ▼
┌─────────────────────────────────────────┐
│      Modify each skilled weight neuron of │
│            the weight matrix S116         │
└─────────────────────────────────────────┘
```

FIGURE 4B

| Global Concept | Concept (<concept>) | Concept prompt | Reference prompt | List |
|---|---|---|---|---|
| Art Styles | Van Gogh<br>Monet<br>Leonardo Da Vinci<br>Salvador Dali<br>Pablo Picasso | a <object> in the style of <concept> | a <object> | <object> ∈ [*cat, dog, mouse, bear,<br>car, chair, bag, ball,<br>door, rabbit, flower, bowl,<br>bat, horse, bird, wall, bottle,<br>building, chicken, duck*] |
| Nudity | naked | a photo of a naked <person> | a photo of a <person> | <person> ∈ A list of person related words |
| Object Erasure | parachute, gas pump<br>golf ball, cassette player<br>english springer, tench<br>chain saw, french horn | a <concept> in a <scene> | a <scene> | a <scene> ∈ [*road, garden, beach<br>room, park, table<br>bag, tree, forest<br>street, shelter, chair*] |
| Object Erasure | church, garbage truck | a <concept> near a <place> | a <place> | <place> ∈ *road, park, beach, street<br>house, tree, forest, statue, car*] |
| Gender change | Male to Female | a photo of a <male> | a photo of a <female> | <male> ∈ [*man, boy, person, guy<br>father, son, husband, uncle*] |
| | Female to Male | a photo of a <female> | a photo of a <male> | <female> ∈ [*woman, girl, female, lady<br>mother, daughter, wife, aunt*] |

FIGURE 5

FIGURE 6

| | Artist erasure | | COCO | |
| | Similarity ↓ | Score ↑ | FID ↓ | Similarity ↑ |
|---|---|---|---|---|
| Original SD | 42.1 | 23.0 | **14.5** | **31.3** |
| ESD | 34.1 | 49.2 | 15.9 | 30.7 |
| UCE | 32.8 | 44.0 | 15.7 | **31.3** |
| FMN | 28.4 | 82.4 | 20.9 | 29.8 |
| CA | 32.4 | 65.2 | 17.5 | 31.3 |
| ConceptPrune | **26.9** | **94.0** | 16.9 | 29.9 |

FIGURE 7

FIGURE 8

| | Ring-A-Bell ↑ | MMA ↑ | UnlearnDiffAtk ↓ |
|---|---|---|---|
| ESD | 52.8 | 87.3 | 76.1 |
| UCE | 67.6 | 63.3 | 93.2 |
| SLD | 2.8 | 25.5 | 82.4 |
| FMN | 5.6 | 53.6 | 97.9 |
| SDv2 | 1.8 | 26.8 | 73.8 |
| Ours | **85.2** | **95.6** | **64.8** |

FIGURE 9

| Classes | Accuracy of Erased Classes ↓ | | | | Accuracy of Preserved Classes ↑ | | | |
|---|---|---|---|---|---|---|---|---|
| | ESD | UCE | FMN | ConceptPrune | ESD | UCE | FMN | ConceptPrune |
| Church | 54.2 | 8.4 | 2.0 | **6.0** | 80.2 | 77.5 | 57.8 | **82.8** |
| English Springer | 6.2 | 0.2 | 1.9 | **0.0** | 62.6 | 78.9 | 73.5 | **80.1** |
| Golf ball | 5.8 | 0.8 | 13.7 | **0.0** | 65.6 | 79.0 | 82.8 | **87.8** |
| Gas Pump | 8.6 | **0.0** | 7.9 | **0.0** | 66.5 | **80.7** | 79.0 | 83.0 |
| Tench | 9.6 | **0.0** | 5.7 | **0.0** | 66.6 | 79.3 | 78.4 | **85.0** |
| Parachute | 23.8 | **1.4** | 8.3 | 7.0 | 65.4 | 77.4 | 98.2 | 80.6 |
| Cassette Player | 0.6 | **0.0** | 1.0 | 1.0 | 64.5 | 90.3 | 68.7 | 94.3 |
| Chain Saw | 6.0 | **0.0** | 0.1 | **0.0** | 71.6 | 80.2 | 78.4 | **91.5** |
| French Horn | 0.4 | 3.0 | **0.0** | 3.0 | 77.0 | 80.1 | 78.3 | **88.2** |
| Garbage Truck | 10.4 | 14.8 | 0.1 | **0.0** | 51.5 | **78.7** | 74.9 | 85.8 |
| Average | 12.5 | 2.7 | 4.1 | **1.7** | 66.9 | **80.2** | 77.5 | **85.9** |

FIGURE 10

| | Artist Style | | Object erasing | | | |
|---|---|---|---|---|---|---|
| | Vincent Van Gogh | | Parachute | Tench | Garbage Truck | Church |
| | Top-1 ASR | Top-3 ASR | ASR | ASR | ASR | ASR |
| ESD | 32.0 | 76.0 | 54.0 | 36.0 | 24.0 | 60.0 |
| UCE | 94.0 | 100.0 | 43.0 | 22.0 | 38.0 | 68.0 |
| FMN | 56.0 | 90.0 | 100.0 | 100.0 | 98.0 | 96.0 |
| CA | 77.0 | 92.0 | – | – | – | – |
| ConceptPrune (Ours) | **2.4** | **24.4** | **34.0** | **16.1** | **0.0** | **21.7** |

| | ESD | FMN | UCE | CA | Neg-Prompt | SLD-Med | ConceptPrune (Ours) |
|---|---|---|---|---|---|---|---|
| Tench | 59.7 | 60.6 | 20.6 | 29.4 | 72.6 | 75.4 | **0.0** |
| Church | 87.4 | **0.0** | 82.2 | 72.6 | 78.4 | 72.0 | 11.0 |
| Parachute | 94.2 | 93.4 | 94.2 | 92.4 | 77.2 | 95.8 | **0.0** |
| Garbage Truck | 57.0 | 69.6 | 89.6 | 79.4 | 84.6 | 94.8 | **6.8** |
| Average | 74.5 | 55.9 | 71.7 | 68.5 | 78.2 | 84.5 | **4.5** |

FIGURE 11

| | COCO FID | CLIP score | Accuracy on erased classes | ASR |
|---|---|---|---|---|
| UCE | 17.7 | 31.0 | 4% | 22% |
| ConceptPrune | 17.5 | 29.9 | 7% | 6% |

FIGURE 12

FIGURE 13A

FIGURE 13B

Apparatus 100

Processor(s) 102

Pre-Trained Diffusion Model 106

Memory 104

Weight Matrix 108

First set of text prompts 110

Second set of text prompts 112

FIGURE 14

Europäisches
Patentamt
European
Patent Office
Office européen
des brevets

# EUROPEAN SEARCH REPORT

**Application Number**

EP 25 17 7356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMYADEEP BASU ET AL: "On Mechanistic Knowledge Localization in Text-to-Image Generative Models", ARXIV.ORG, CORNELL UNIVERSITY LIBRARY, 201 OLIN LIBRARY CORNELL UNIVERSITY ITHACA, NY 14853, 2 May 2024 (2024-05-02), XP091744981, * page 2, left-hand column, lines 9-13 * * page 4, left-hand column, line 2 - page 4, right-hand column, line 19 * * page 7, left-hand column, lines 2-11 * * figure 1 * ----- | 1-15 | INV. G06N3/0475 G06N3/0895 |

**TECHNICAL FIELDS SEARCHED (IPC)**

G06N

The present search report has been drawn up for all claims

| Place of search | Date of completion of the search | Examiner |
|---|---|---|
| The Hague | 21 October 2025 | Bykowski, Artur |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROBIN ROMBACH ; ANDREAS BLATTMANN ; DOMINIK LORENZ ; PATRICK ESSER ; BJÖRN OMMER**. High resolution image synthesis with latent diffusion models. *arXiv*, 2021
- **OLAF RONNEBERGER ; PHILIPP FISCHER ; THOMAS BROX**. U-net: Convolutional networks for biomedical image segmentation. *arXiv*, 2015
- **NOAM SHAZEER**. Glu variants improve transformer. *arXiv*, 2020
- **MINGJIE SUN ; ZHUANG LIU ; ANNA BAIR ; J. ZICO KOLTER**. A simple and effective pruning approach for large language models. *arXiv*, 2024
- **GONGFAN FANG ; XINYIN MA ; XINCHAO WANG**. Structural pruning for diffusion models. *arXiv*, 2023
- **ROHIT GANDIKOTA ; HADAS ORGAD ; YONATAN BELINKOV ; JOANNA MATERZY'NSKA ; DAVID BAU**. Unified concept editing in diffusion models. *arXiv:2308.14761*, 2023
- **ROHIT GANDIKOTA ; JOANNA MATERZY'NSKA ; JADEN FIOTTO-KAUFMAN ; DAVID BAU**. Erasing concepts from diffusion models. *Proceedings of the 2023 IEEE International Conference on Computer Vision*, 2023
- **ERIC ZHANG ; KAIWANG ; XINGQIAN XU ; ZHANGYANGWANG ; HUMPHREY SHI**. Forget-me-not: Learning to forget in text-to-image diffusion models. *arXiv:2211.08332*, 2023
- **NUPUR KUMARI ; BINGLIANG ZHANG ; SHENG-YU WANG ; ELI SHECHTMAN ; RICHARD ZHANG ; JUN-YAN ZHU**. Ablating concepts in text-to-image diffusion models. *International Conference on Computer Vision (ICCV)*, 2023
- **PATRICK SCHRAMOWSKI ; MANUEL BRACK ; BJÖRN DEISEROTH ; KRISTIAN KERSTING**. Safe latent diffusion: Mitigating inappropriate degeneration in diffusion models. *Proceedings of the IEEE Conference on Computer Vision and Pattern Recognition (CVPR)*, 2023

- **ROBIN ROMBACH ; ANDREAS BLATTMANN ; DOMINIK LORENZ ; PATRICK ESSER ; BJÖRN OMMER**. High resolution image synthesis with latent diffusion models. *Proceedings of the IEEE/CVF Conference on Computer Vision and Pattern Recognition (CVPR)*, June 2022, 10684-10695
- **JEREMY HOWARD ; SYLVAIN GUGGER**. Fastai: A layered api for deep learning. *Information*, February 2020, vol. 11 (2), ISSN 2078-2489, 108, http://dx.doi.org/10.3390/info11020108
- **JIA DENG ; WEI DONG ; RICHARD SOCHER ; LI-JIA LI ; KAI LI ; FEI-FEI LI**. *Imagenet: a large-scale hierarchical image database*, 2009, 248-255
- **KAIMING HE ; XIANGYU ZHANG ; SHAOQING REN ; JIAN SUN**. Deep residual learning for image recognition. *arXiv*, 2015
- **YIMENG ZHANG ; JINGHAN JIA ; XIN CHEN ; AOCHUAN CHEN ; YIHUA ZHANG ; JIANCHENG LIU ; KE DING ; SIJIA LIU**. To generate or not? safety-driven unlearned diffusion models are still easy to generate unsafe images... for now. *arXiv:2310.11868*, 2023
- **MINH PHAM ; KELLY O. MARSHALL ; CHINMAY HEGDE**. Circumventing concept erasure methods for text-to-image generative models. *arXiv*, 2023
- **BAN YUANHAO ; WANG RUOCHEN ; ZHOU TIANYI ; CHENG MINHAO ; GONG BOQING ; HSIEH CHO-JUI**. Understanding the impact of negative prompts: When and how do they take effect?. *arXiv*, 2024
- **YIJUN YANG ; RUIYUAN GAO ; XIAOSEN WANG ; NAN XU ; QIANG XU**. Mma-diffusion: Multimodal attack on diffusion models. *arXiv:2311.17516*, 2023
- **YU-LIN TSAI ; CHIA-YI HSU ; CHULIN XIE ; CHIH-HSUN LIN ; JIA-YOU CHEN ; BO LI ; PIN-YU CHEN ; CHIA-MU YU ; CHUN-YING HUANG**. Ring-a-bell! how reliable are concept removal methods for diffusion models?. *arXiv*, 2024